# EUROPÄISCHE PATENTSCHRIFT

(11) **EP 2 142 011 B1**
(45) Veröffentlichungstag und Bekanntmachung des Hinweises auf die Patenterteilung: **12.01.2011**
(21) Anmeldenummer: 08717106.2
(22) Anmeldetag: 25.02.2008
(51) Int. Cl.: A23L 1/22

(54) **VERFAHREN ZUR GESCHMACKSMODULATION VON STOFFLICHEN ZUSAMMENSETZUNGEN, DIE MINDESTENS EINEN HIGH INTENSITY SWEETENER (HIS) ENTHALTEN**
METHOD FOR MODULATING THE TASTE OF MATERIAL COMPISITIONS CONTAINING AT LEAST ONE HIGH INTENSITY SWEETENER (HIS)
PROCÉDÉ POUR MODULER LE GOÛT DE COMPOSITIONS DE MATIÈRES CONTENANT AU MOINS UN ÉDULCORANT DE HAUTE INTENSITÉ

(30) Priorität: 23.02.2007 EP 07102977; 26.11.2007 EP 07121532
(43) Veröffentlichungstag der Anmeldung: 13.01.2010
(73) Patentinhaber: B.R.A.I.N. Biotechnology Research And Information Network AG, 64673 Zwingenberg (DE)
(72) Erfinder: MATUSCHEK, Markus, 69469 Weinheim (DE); JAGER, Martin B, 67677 Enkenbach-Alsenborn (DE); KLEBER, Alice, 64625 Bensheim (DE); KROHN, Michael, 64653 Lorsch (DE); ZINKE, Holger, 64673 Zwingenberg (DE)
(74) Vertreter: Vossius & Partner
(86) Internationale Anmeldenummer: PCT/EP2008/052272
(87) Internationale Veröffentlichungsnummer: WO 2008/102018

(56) Entgegenhaltungen:
- WO-A-03/047550
- WO-A-03/086293
- US-A- 5 028 625
- US-A- 5 336 510
- US-A- 5 780 086
- US-A1- 2005 008 754

## Beschreibung

### Gebiet der Erfindung

Die vorliegende Erfindung betrifft ein neues Verfahren zur Geschmacksmodulation insbesondere zur Reduktion von bitterem Geschmack und Nachgeschmack von stofflichen Zusammensetzungen, die mindestens einen High Intensity Sweetener (HIS) enthalten.

### Stand der Technik

Stoffliche Zusammensetzungen wie Lebensmittel, Getränke, Genussmittel Süßungsmittel, Tiernahrungsmittel, Kosmetika und Pharmazeutika enthalten häufig Geschmacksstoffe, die grundsätzlich unerwünscht oder in der vorhandenen Intensität zu dominant oder zu niedrig sind. Im Bereich der Süßungsmittel treten häufig neben den süßen Geschmackseindrücken weitere Geschmackseindrücke wie z.B. ein metallischer, chemischer, bitterer oder synthetischer Geschmack oder Nachgeschmack auf, die den Gesamtgeschmackseindruck der zu süßenden Zusammensetzung nachteilig beeinflussen. Im Rahmen der vorliegenden Erfindung wird unter Geschmack der unmittelbare Geschmackseindruck verstanden, der entsteht, während sich die Zusammensetzung im Mund befindet. Unter Nachgeschmack wird die Geschmackswahrnehmung nach dem Abschlucken, insbesondere nach einer Wartezeit von etwa 30 Sekunden, verstanden.

Beispielsweise sind Koffein in Tee oder Kaffee sowie Hopfenextrakte in Bier natürliche Bitterstoffe, welche jedoch in zu hoher Konzentration einen negativen Geschmackseindruck hervorrufen. In speziellen Bittergetränken wie beispielsweise Tonic Water oder Bitter Lemon ist ein charakteristischer Bittergeschmack, hervorgerufen durch den Zusatzstoff Chinin, in besonderem Maße erwünscht. Andererseits ist insbesondere der bittere Geschmack oder Nachgeschmack vieler künstlicher Süßstoffe wie beispielsweise Acesulfam K (ACK), und Saccharin ein unerwünschter Nebengeschmack des Süßstoffes in anderen Limonaden. Auch Fruchtsäfte, insbesondere Orangensaft, leiden unter der Beeinträchtigung des Geschmackes durch z.B. Flavonoidglykoside, welche einen bitteren Geschmack haben. Auch viele pharmazeutische Wirkstoffe, insbesondere Ibuprofen haben einen stark bitteren Geschmack, welcher zur Reduktion der Akzeptanz bei der Einnahme des Wirkstoffes führt.

Zur Reduktion des natürlichen Bittergeschmacks beispielsweise von Tee, Kaffee oder Orangensaft werden diese Lebensmittel, Getränke, Genussmittel entweder enzymatisch behandelt, um die bitter schmeckenden Substanzen zu zerstören, oder die bittere Substanz wird wie im Falle des Koffeins im Tee bzw. Kaffee durch Entkoffeinierung entfernt.

Eine weitere Möglichkeit der Modifikation des Geschmackseindrucks stellt die Zugabe von Geschmacksmodulatoren zu den gewünschten Lebensmitteln, Getränken, Genussmitteln, Tiernahrungsmitteln, Süßungsmitteln, Kosmetika und Pharmazeutika dar.

Es ist daher wünschenswert, Stoffe zu finden, die unangenehme Geschmackseindrücke unterdrücken oder reduzieren sowie gewünschte Geschmackseindrücke gezielt verstärken oder zumindest nicht negativ beeinflussen.

Insbesondere im Bereich der Pharmawirkstoffe sind eine ganze Reihe von, insbesondere bittermodifizierenden, Substanzen bekannt. So wird beispielsweise der bittere Geschmack von Ibuprofen durch Polylysine und Polyarginine (vgl. die internationale Patentanmeldung WO 2003/086293), durch Meglumin-Salz (vgl. das amerikanische Patent US 5,028,625), durch Natriumchlorid oder Natrium-Sacharin (vgl. die internationale Patentanmeldung WO 2003/047550) oder durch Hydroxypropyl-beta-cyclodextrin oder kaubare Methacrylsäurecopolymerisate (vgl. Modifying Bitterness, Mechanism, Ingredients And Applications, Glenn Roy, 1997) maskiert, um die Einnahme durch die Patienten zu erleichtern. Auch Koffein lässt sich durch eine Vielzahl von Geschmacksmodulatoren in seiner Bitterkeit reduzieren wie beispielsweise durch Glutaminsäure, Dicalcium-disalicylat, Stärke, Lactose, Manitol sowie durch Phosphatidsäure und beta-Lactoglobulin (vgl. Glenn Roy, 1997) und weiterhin durch Hydroxybenzoesäureamide insbesondere Hydroxybenzoesäurevanillylamide (vgl. Ley et al., Journal of Agricultural & Food Chemistry, 2006).

Weitere Stoffe, die zur Reduktion eines Bittergeschmacks im Allgemeinen und insbesondere in Pharmazeutika und Lebensmittel eingesetzt wurden, sind Lecithin, Ascorbat und Citrat (vgl. die japanische Patentanmeldung JP 2001226293), Ester von Mono- oder Diglyceriden wie Glycerinmonostearat und Polycarbonsäuren wie Succinsäure (vgl. die europäische Patentanmeldung EP 0 732 064 A1), Hydroxyflavanone (vgl. die europäische Patentanmeldung EP 1 258 200 A1), 2-Phenyl-4-chromanonderivate (vgl. die deutsche Patentanmeldung DE 101 22 898), Natriumsulfathydrat (vgl. die japanische Patentanmeldung JP 02025428). Aus dem amerikanischen Patent US 5,637,618 ist weiterhin die Verwendung von Benzoesäurederivaten zur Reduktion des Bittergeschmacks in Getränken sowie von Süßstoffen und von Kaliumchlorid bekannt. Der Bittergeschmack von Kaliumchlorid wird auch mit Hilfe von 2,4-Dihydroxybenzoesäure, Carrageenan und Thaumatin gehemmt (vgl. Glenn Roy, 1997; das amerikanische Patent US 5,637,618 sowie die japanischen Patentanmeldungen JP 04262758 und JP 07083684).

Die bekannten Geschmacksmodulatoren befriedigen aber nicht in vollem Umfang, insbesondere wenn sie zur Reduktion des Bittergeschmacks von stofflichen Zusammensetzungen, wie z.B. Lebensmittel, Getränke, Genussmittel, Süßungsmittel, Tiernahrungsmittel, Kosmetika und Pharmazeutika, die mindestens einen HIS enthalten, insbesondere aber von HIS enthaltenden Erfrischungsgetränken, verwendet werden sollen. So ist ihre die Bitterkeit reduzierende Wirkung häufig nicht ausreichend. Wird aus diesem Grunde die Konzentration der bekannten Geschmacksmodulatoren erhöht, um eine ausreichende Wirkung zu erzielen, kann es zu unerwünschten physikalischen und/oder chemischen Wechselwirkungen mit den übrigen Bestandteilen der jeweiligen Zusammensetzungen und/oder zu einer nachteiligen Beeinflussung, insbesondere zu einer Verschlechterung bis hin zu einer völligen Verfälschung ihres charakteristischen Geschmackseindrucks, kommen.

Die gemeinsame Verwendung von Azofarbstoffen wie Gelb 6 (E110) in einer Konzentration von 36 mg/l und Rot 40 (E129) in einer Konzentration von 2 mg/l zur Einfärbung von Erfrischungsgetränken, die ACK als HIS enthalten, ist bekannt. Ein Beispiel für ein solches Produkt ist Diet Sunkist® Orange Soda. Die Azofarbstoffe dienen dem Einfärben des Getränks. Es ist nicht bekannt, ob die eingesetzten Azofarbstoffe auch eine Reduzierung des bitteren Geschmacks und des Nachgeschmacks von ACK bewirken.

In der älteren europäischen Patentanmeldung mit der Anmeldenummer 07102977.1 wird die Verwendung von Azofarbstoffen als Geschmacksmodulatoren für stoffliche Zusammensetzungen, die mindestens einen HIS enthalten, beschrieben. Allerdings wird in einer gegebenen stofflichen Zusammensetzung immer nur ein Azofarbstoff verwendet.

### Aufgabe der Erfindung

Demgemäß lag der vorliegenden Erfindung die Aufgabe zu Grunde, ein neues Verfahren zur Geschmacksmodulation insbesondere zur Reduktion von bitterem Geschmack und Nachgeschmack, von stofflichen Zusammensetzungen, die mindestens einen High Intensity Sweetener (HIS) enthalten, insbesondere von Lebensmitteln, Getränken, Genussmitteln, Süßungsmitteln, Tiernahrungsmitteln, Kosmetika und Pharmazeutika, die mindestens einen HIS enthalten, zu finden.

Das neue Verfahren zur Geschmacksmodulation soll bewirken, dass durch die eingesetzten Geschmacksmodulatoren keine unerwünschten physikalischen und/oder chemischen Wechselwirkungen mit den übrigen Bestandteilen der jeweiligen Zusammensetzungen, insbesondere der Lebensmittel, Getränke, Genussmittel, Süßungsmittel, Tiernahrungsmitteln, Kosmetika und Pharmazeutika, hervorgerufen werden und der charakteristische Geschmackseindruck nicht nachteilig beeinflusst, insbesondere nicht verschlechtert oder gar völlig verfälscht wird.

Insbesondere soll es das neue Verfahren ermöglichen, den bitteren Geschmack und den bitteren Nachgeschmack von stofflichen Zusammensetzungen, die mindestens einen HIS enthalten, bereits mit sehr geringen Mengen an Geschmacksmodulatoren signifikant zu reduzieren.

### Erfindungsgemäße Lösung

Demgemäß wurde das neue Verfahren zur Geschmacksmodulation von stofflichen Zusammensetzungen, die mindestens einen High Intensity Sweetener HIS enthalten, gefunden, bei dem einer stofflichen Zusammensetzung, die mindestens einen HIS enthält, mindestens zwei Azoverbindungen in einer Gesamtkonzentration von 0,1 bis 30 ppm oder 0,1 bis 30 mg/l als Geschmacksmodulatoren zugesetzt werden.

Im Folgenden wird das neue Verfahren zur Geschmacksmodulation von stofflichen Zusammensetzungen als »erfindungsgemäßes Verfahren« bezeichnet.

### Vorteile der Erfindung

Im Hinblick auf den Stand der Technik war es überraschend und für den Fachmann nicht vorhersehbar, dass die Aufgabe, die der vorliegenden Erfindung zu Grunde lag, mithilfe des erfindungsgemäßen Verfahrens gelöst werden konnte.

Überraschenderweise bewirkte das erfindungsgemäße Verfahren, dass durch die eingesetzten Geschmacksmodulatoren keine unerwünschten physikalischen und/oder chemischen Wechselwirkungen mit den übrigen Bestandteilen der jeweiligen stofflichen Zusammensetzungen, die mindestens einen HIS enthielten, insbesondere der Lebensmittel, Getränke, Genussmittel, Süßungsmittel, Tiernahrungsmitteln, Kosmetika und Pharmazeutika, hervorgerufen wurde und ihr charakteristischer Geschmackseindruck nicht nachteilig beeinflusst, insbesondere nicht verschlechtert oder gar völlig verfälscht wurde.

Insbesondere ermöglichte es das erfindungsgemäße Verfahren, den bitteren Geschmack und den bitteren Nachgeschmack von stofflichen Zusammensetzungen, die mindestens einen HIS enthielten, bereits mit sehr geringen Mengen an Geschmacksmodulatoren signifikant zu reduzieren.

Diese überraschend geringen Mengen beeinflussten auch den Farbeindruck der stofflichen Zusammensetzungen nicht nachteilig, was insbesondere im Falle von farbigen Erfrischungsgetränken ein ganz besonderer Vorteil war.

Vor allem aber war es überraschend, dass die Geschmacksmodulation einer gegebenen stofflichen Zusammensetzung, die mindestens einen HIS enthielt, durch das erfindungsgemäße Verfahren hervorragend reproduzierbar war, was gerade im Hinblick auf die Herstellung von Massenprodukten wie Lebensmittel, Getränke, Genussmittel, Süßungsmittel, Tiernahrungsmittel, Kosmetika und Pharmazeutika ein ganz besonderer Vorteil war.

### Ausführliche Beschreibung der Erfindung

Das erfindungsgemäße Verfahren betrifft die Geschmacksmodulation, insbesondere die Reduktion des bitteren Geschmacks und des bitteren Nachgeschmacks, von stofflichen Zusammensetzungen, die mindestens einen so genannten High Intensity Sweetener (HIS) enthalten.

Vorzugsweise handelt es sich bei den stofflichen Zusammensetzungen um Lebensmittel, Getränke Genussmittel, Süßungsmittel, Tiernahrungsmittel, Kosmetika und Pharmazeutika. Bevorzugt handelt es sich bei den Getränken um Erfrischungsgetränke, besonders bevorzugt coffeinhaltige Erfrischungsgetränke, insbesondere Cola-Getränke.

Die stofflichen Zusammensetzungen enthalten mindestens einen High Intensity Sweetener HIS als Süßungsmittel oder Süßstoff. Unter HIS versteht man Verbindungen synthetischer oder natürlicher Herkunft, die keinen oder im Verhältnis zur Süßkraft vernachlässigbaren physiologischen Brennwert besitzen (non-nutritive sweeteners) und eine um ein Vielfaches höhere Süßkraft als Saccharose aufweisen. Die Süßkraft einer Verbindung ist durch die Verdünnung gegeben, bei der sie ebenso süß wie eine Saccharose-Lösung schmeckt (isosüße Lösung; 0,1 M = 4%), d. h. eine 500fach verdünnte Lösung eines Süßstoffs schmeckt isosüß wie eine Saccharose-Lösung, wenn der Süßstoff eine Süßkraft von 500 hat.

Beispiele geeigneter HIS sind aus Römpp Online 2007, »Süßstoffe« bekannt. Vorzugsweise werden die HIS aus der Gruppe, bestehend aus Acesulfam-Kalium (ACK), Aspartam (ASP), Saccharin und seinen Salzen, Cyclamat und seinen Salzen, Aspartam-Acesulfam-Salz, Sucralose, Thaumatin, Stevia, Steviosid und Neohesperidin-Dihydrochalkon, bevorzugt ACK, ASP, Saccharin und Sucralose, besonders bevorzugt ACK und Saccharin, insbesondere ACK, ausgewählt.

Vorzugsweise handelt es sich bei der stofflichen Zusammensetzung um eine zuckerarme Zusammensetzung, die weniger als 10 g, vorzugsweise weniger als 1 g, Zucker pro Liter bzw. pro kg Zusammensetzung enthält, insbesondere um eine zuckerfrei Zusammensetzung. Unter Zucker werden vorliegend insbesondere aber nicht aussschliesslich Mono- und Di-Saccharide verstanden.

Vorteilhafterweise handelt es sich bei der stofflichen Zusammensetzung um eine Zusammensetzung mit weniger als 100 kJ, vorzugsweise weniger als 10 kJ, pro Liter oder kg Zusammensetzung.

Vorteilhafterweise handelt es sich bei der stofflichen Zusammensetzung um eine kohlenhydratfreie, insbesondere stärkefreie, Zusammensetzung.

Vorzugsweise handelt es sich bei der stofflichen Zusammensetzung um eine fettarme Zusammensetzung, die weniger als 1 g Fett pro Liter bzw. pro kg Zusammensetzung enthält, insbesondere um eine fettfreie Zusammensetzung.

Bei den zuckerarmen und/oder fettarmen, insbesondere bei den zuckerfreien und/oder fettfreien, Zusammensetzungen handelt es sich vorzugsweise um eine ACK gesüsste Zusammensetzung.

Im Rahmen des erfindungsgemäßen Verfahrens werden den stofflichen Zusammensetzungen mindestens zwei, insbesondere zwei Azoverbindungen mit jeweils mindestens einer Azogruppe zugesetzt. Vorzugsweise sind die Azoverbindungen in Wasser löslich.

Die Gesamtmenge oder Gesamtkonzentration der Azoverbindungen liegt bei 0,1 bis 30 ppm, bevorzugt 0,5 bis 20 ppm und insbesondere 1 bis 10 ppm, jeweils bezogen auf die Gesamtmenge einer stofflichen Zusammensetzung. Handelt es sich bei der stofflichen Zusammensetzung um eine Flüssigkeit, werden die Azoverbindungen in einer Konzentration von 0,1 bis 30 mg/l, bevorzugt 1 bis 20 mg/l und insbesondere 1 bis 10 mg/l verwendet.

Diese geringen wirksamen Gesamtmengen oder Gesamtkonzentrationen führen zu keiner oder nur zu einer sehr geringfügigen, vernachlässigbaren Änderung des Farbeindrucks der stofflichen Zusammensetzungen, was die besondere Vorteilhaftigkeit des erfindungsgemäßen Verfahrens noch einmal untermauert.

Dabei kann das Gewichtsverhältnis der einzelnen Azoverbindungen zueinander breit variiert und den Erfordernissen des Einzelfalls hervorragend angepasst werden. Werden zwei Azoverbindungen verwendet, was erfindungsgemäß bevorzugt ist, liegt das Gewichtsverhältnis der Azoverbindungen zueinander vorzugsweise bei 10 : 1 bis 1 : 10, bevorzugt bei 5 : 1 bis 1 : 5 und insbesondere bei 2 : 1 bis 1 : 2.

Vorzugsweise sind die Azogruppen der Azoverbindungen mit Arylgruppen und/oder Arylgruppen mit Heteroatomen, bevorzugt Arylgruppen, insbesondere Phenylgruppen und/oder Naphthylgruppen, verknüpft. Dabei kann oder können in einer Azoverbindung eine oder mehrere Azogruppen vorhanden sein. Diese können unabhängig voneinander mit Arylgruppen und/oder Arylgruppen mit Heteroatomen, vorzugsweise Arylgruppen, insbesondere insbesondere Phenylgruppen und Naphthylgruppen, verknüpft sein. Vorzugsweise ist mindestens eine Arylgruppe mindestens einfach substituiert. Dabei kann die eine Arylgruppe einer Azogruppe unsubstituiert sein, während die andere mehrfach substituiert ist, .

Beispiele geeigneter Substituenten sind Sulfonsäuregruppen, Nitrogruppen, Alkylgruppen, Carboxylgruppen, Hydroxylgruppen, Estergruppen, Ethergruppen, primäre und sekundäre Aminogruppen, Amidgruppen, Nitrilgruppen und Halogenatome, bevorzugt Sulfonsäuregruppen, Hydroxylgruppen und Nitrogruppen, insbesondere Sulfonsäuregruppen und Hydroxylgruppen.

Vorzugsweise werden die Azoverbindungen aus der Gruppe, bestehend aus den nachstehend aufgeführten Verbindungen 1 bis 112 ausgewählt. Die Azoverbindung können ionisch oder nicht-ionisch sein und geladen oder ungeladen vorliegen.

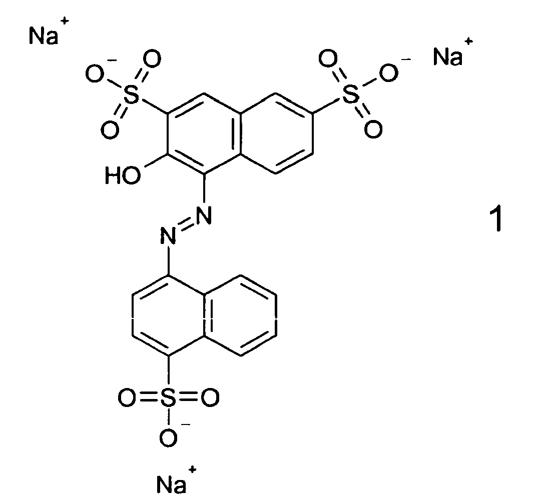

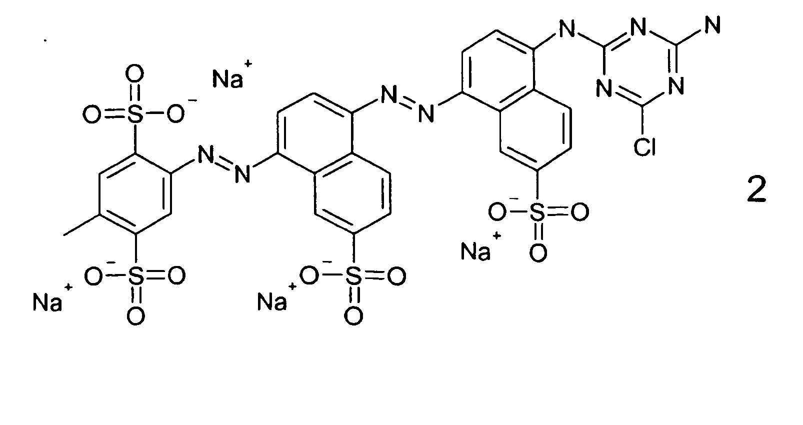

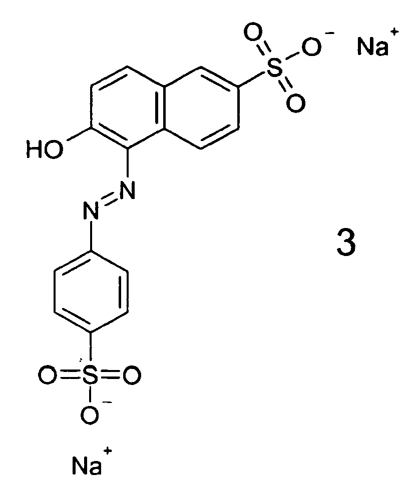

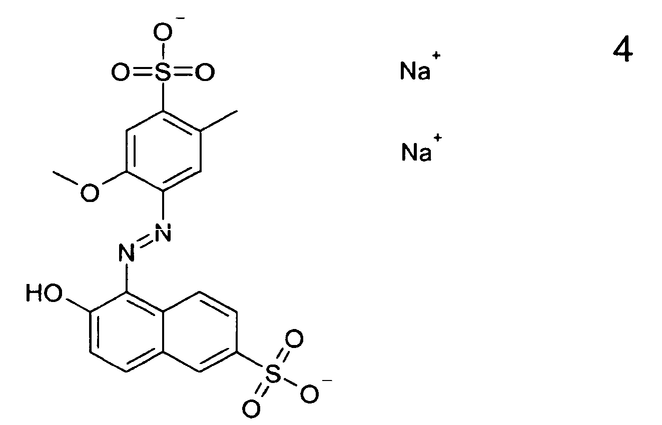

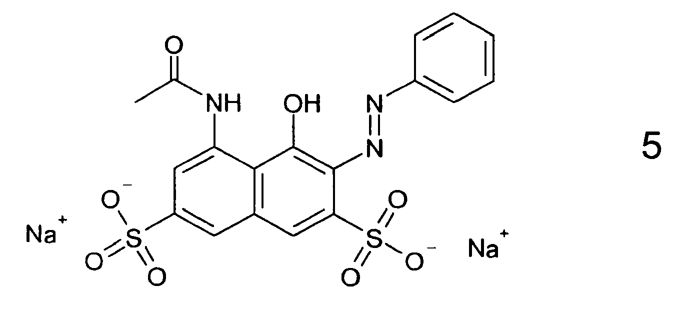

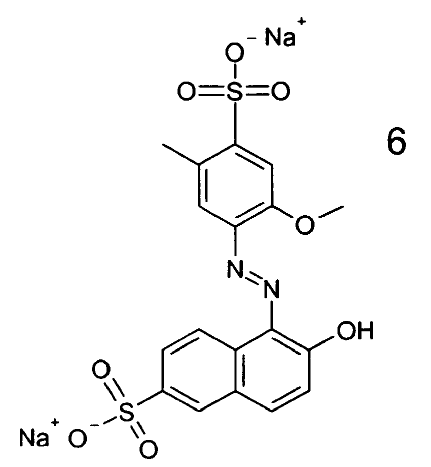

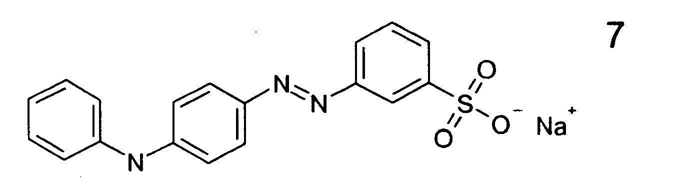

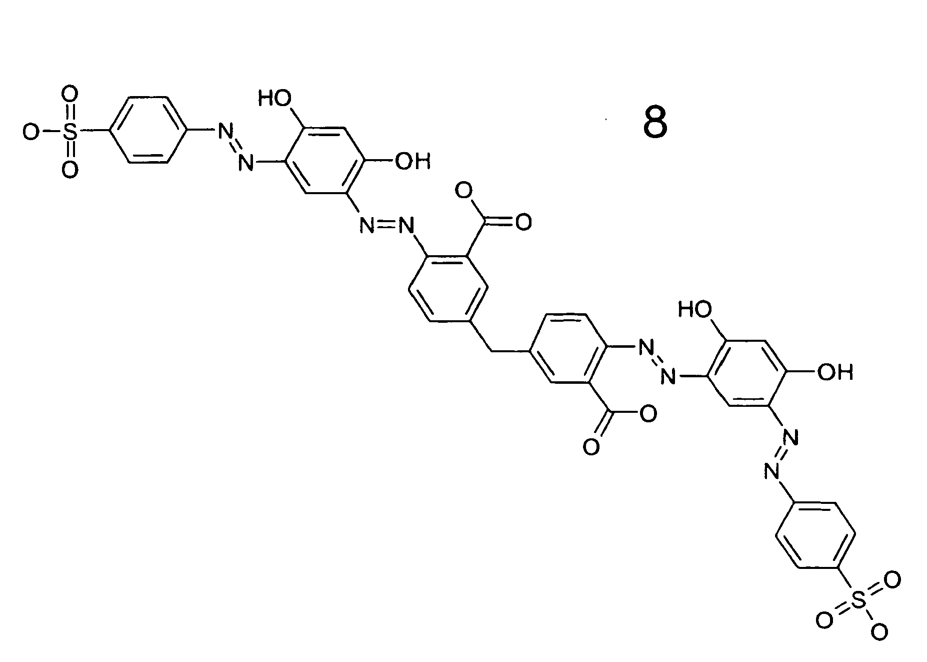

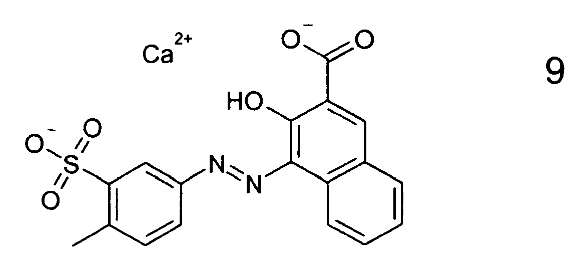

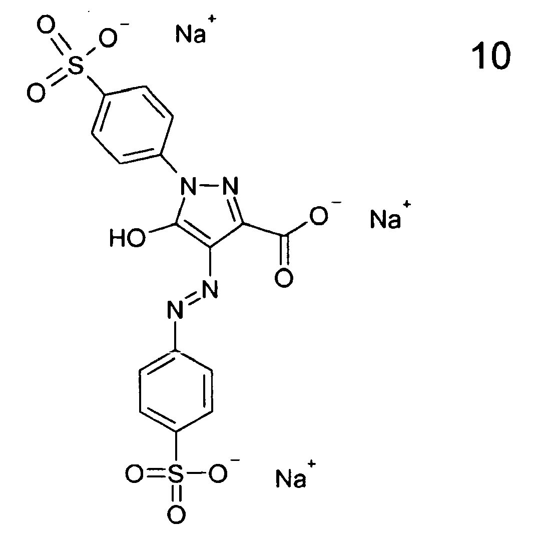

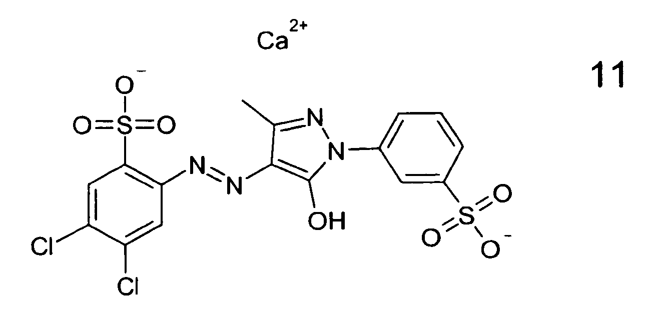

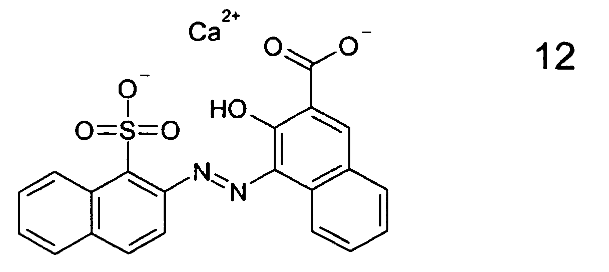

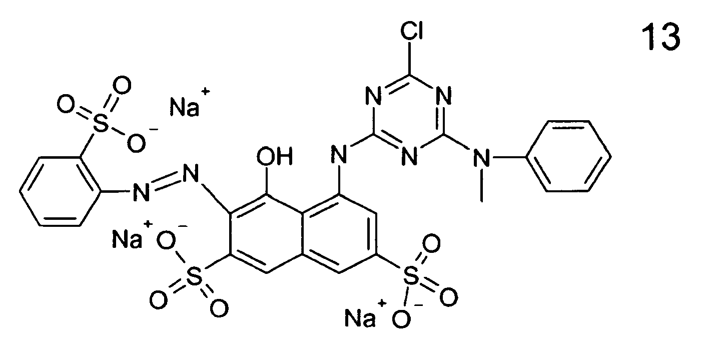

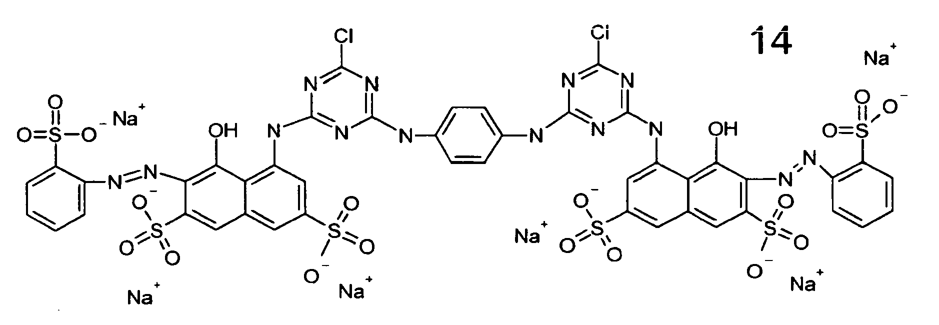

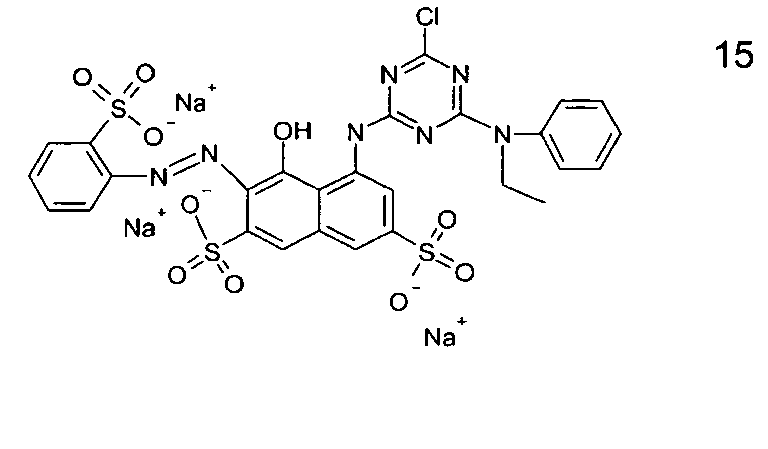

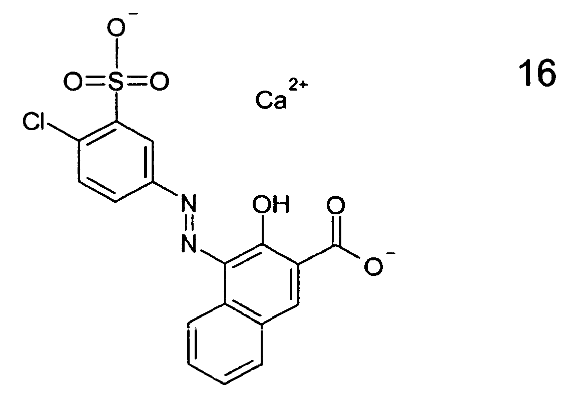

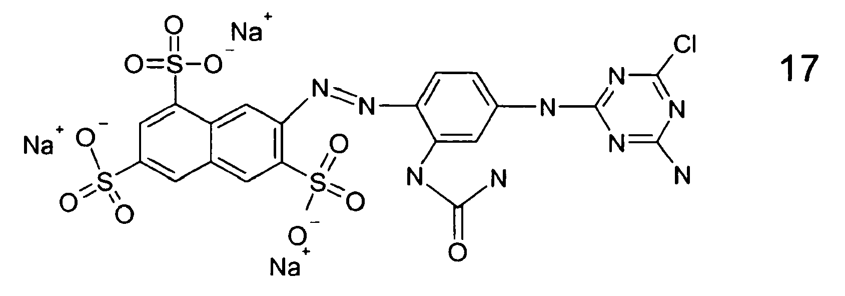

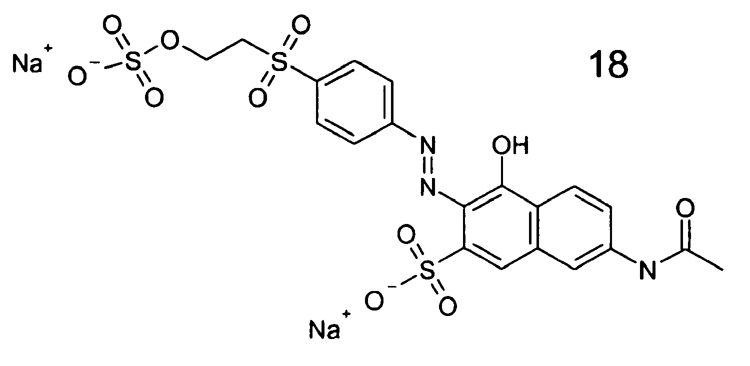

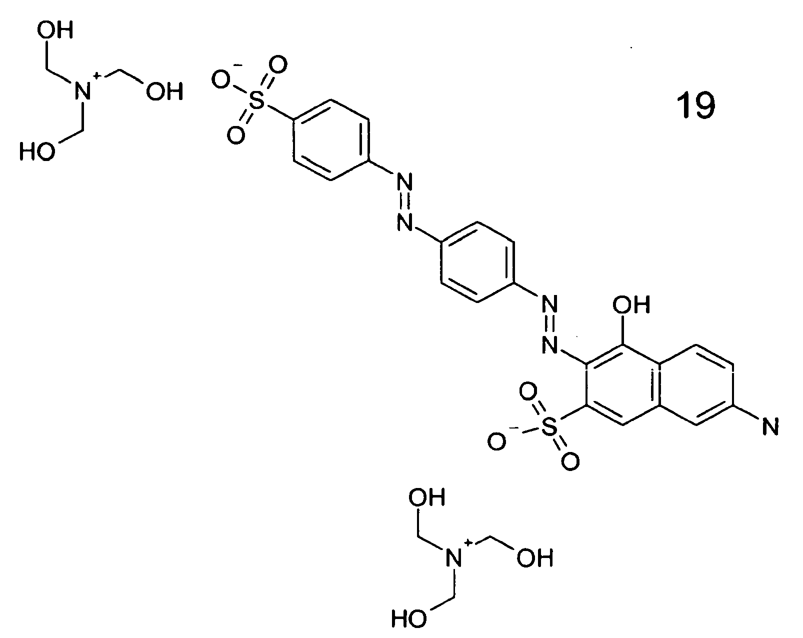

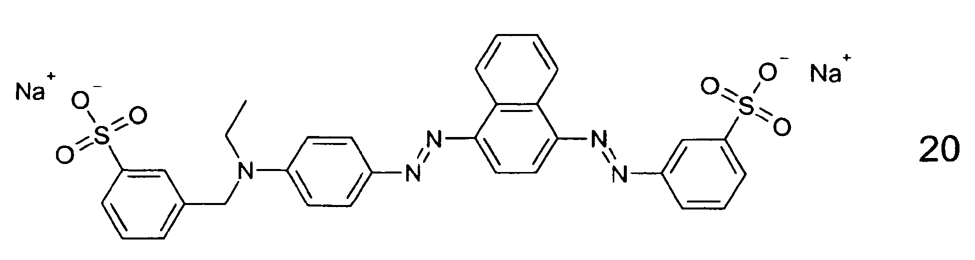

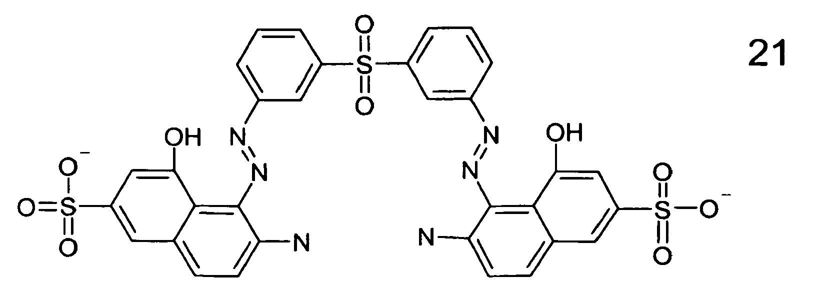

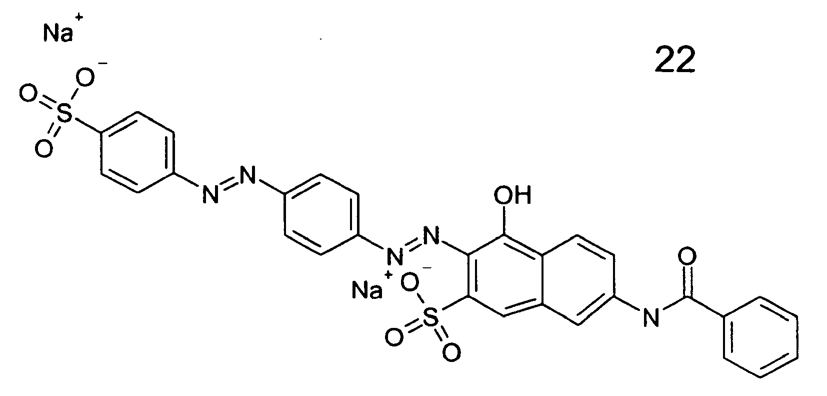

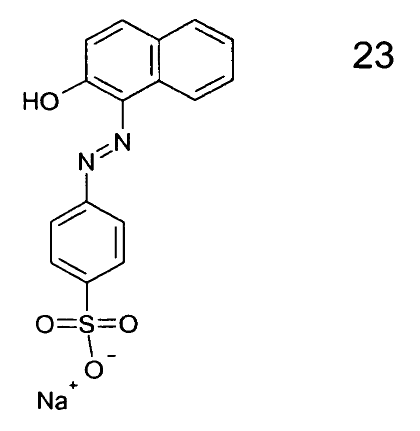

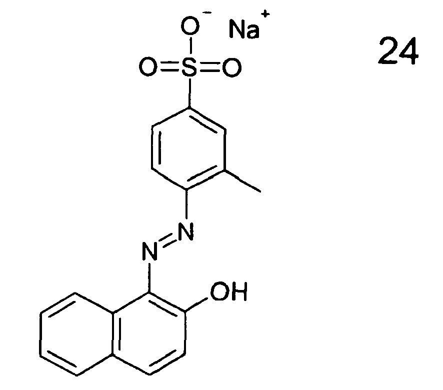

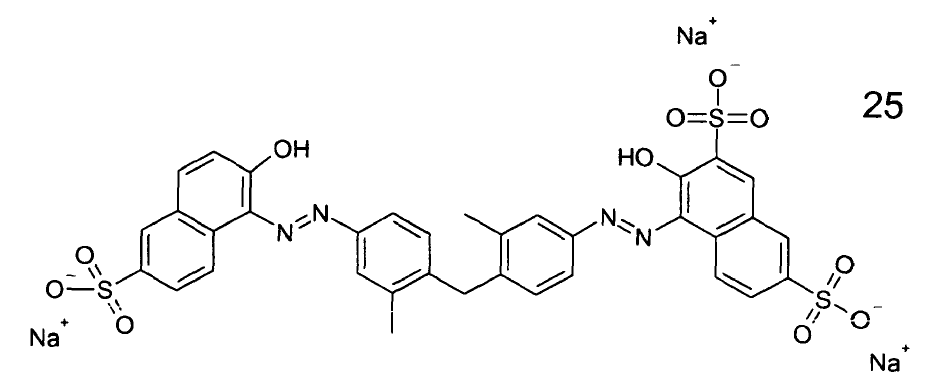

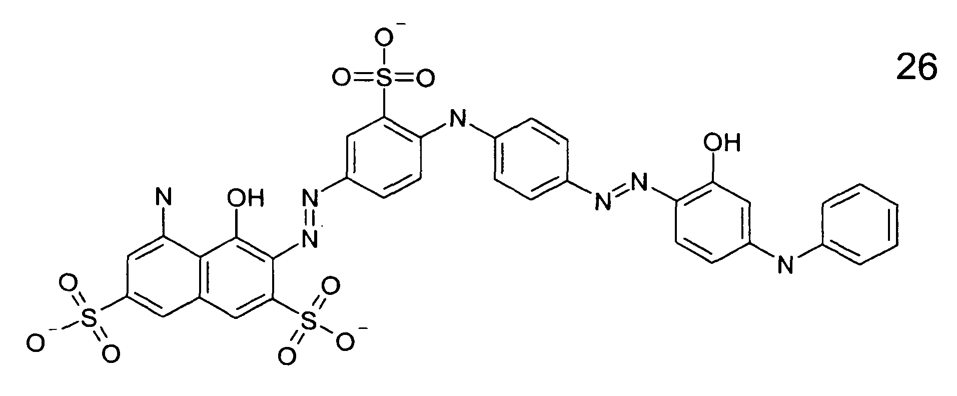

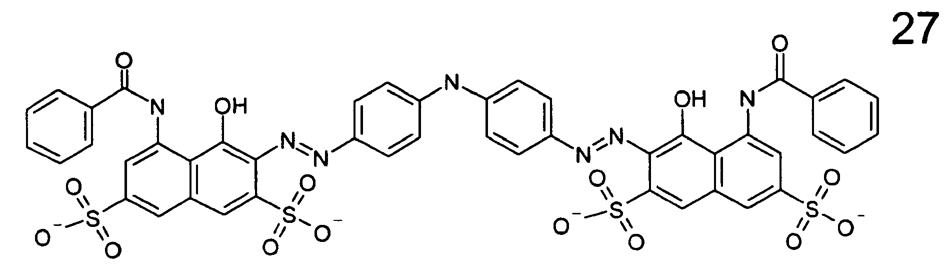

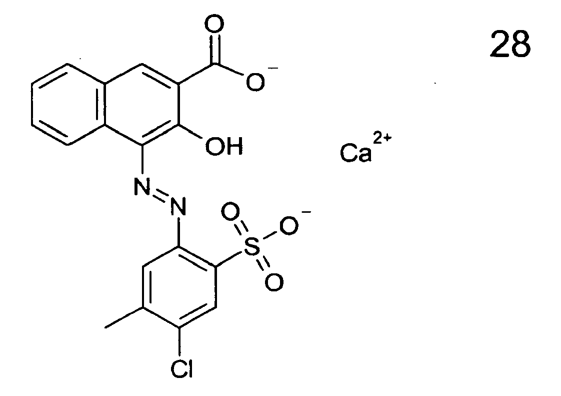

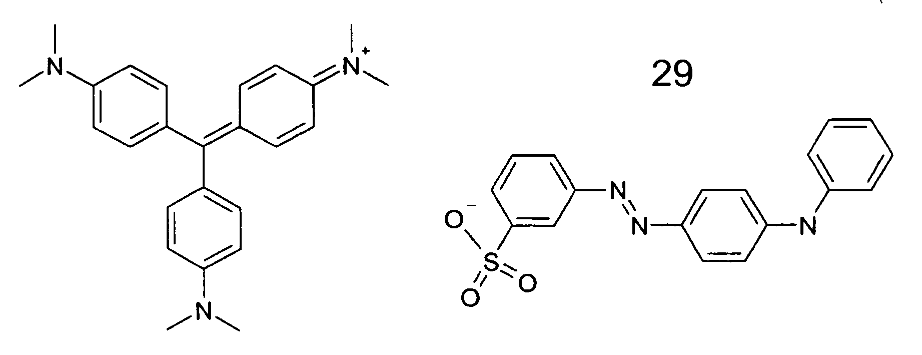

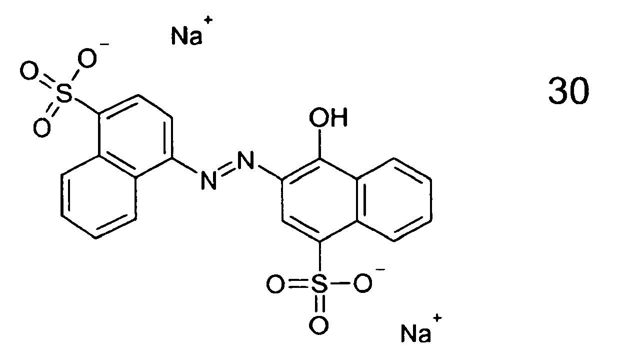

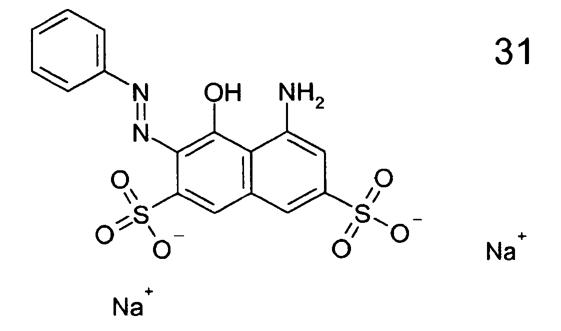

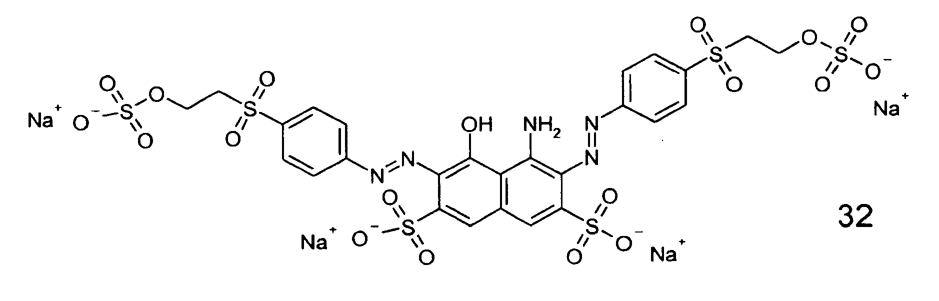

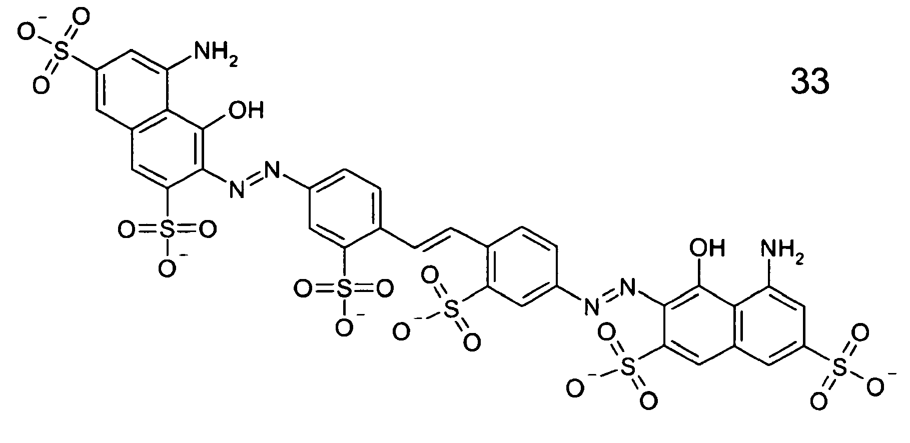

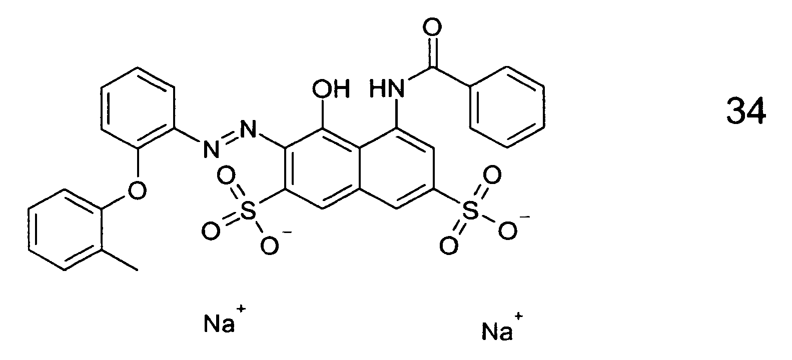

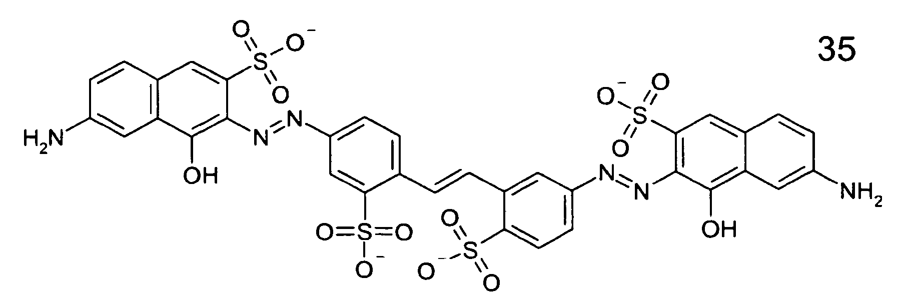

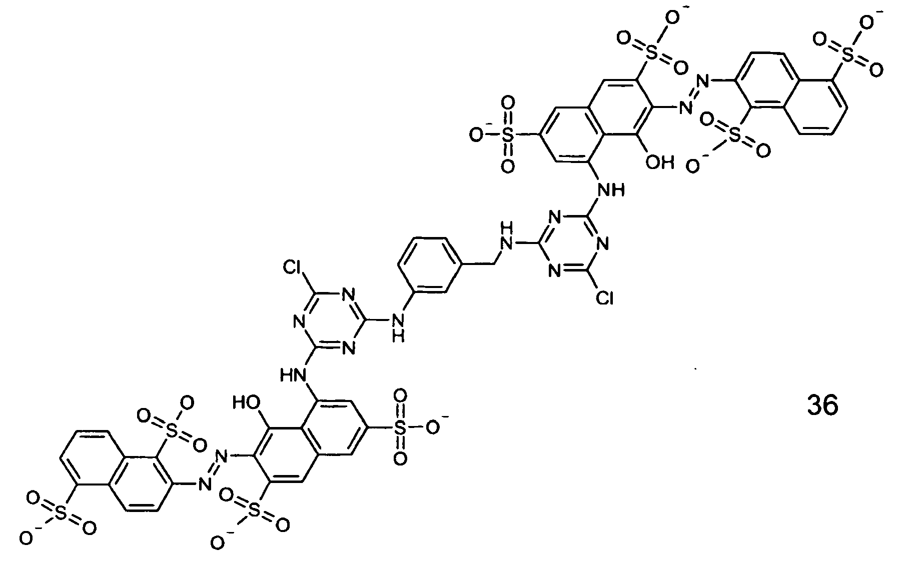

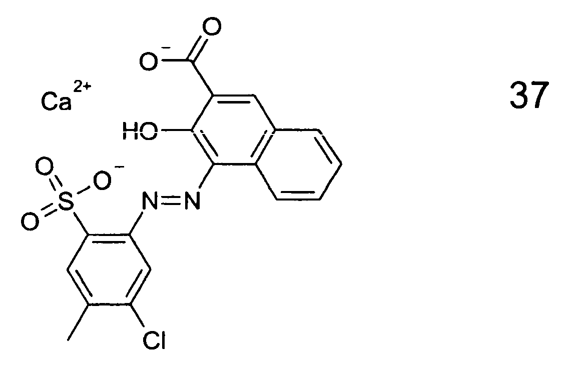

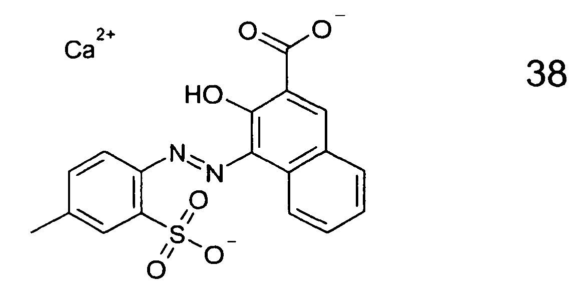

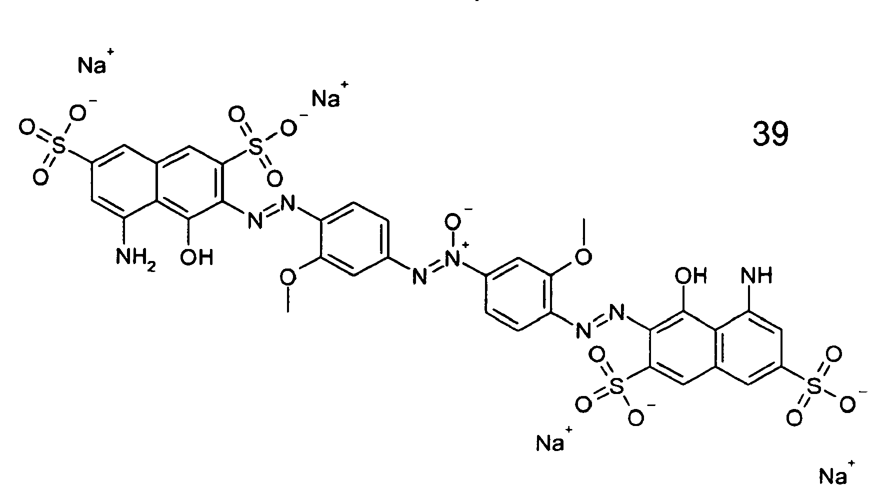

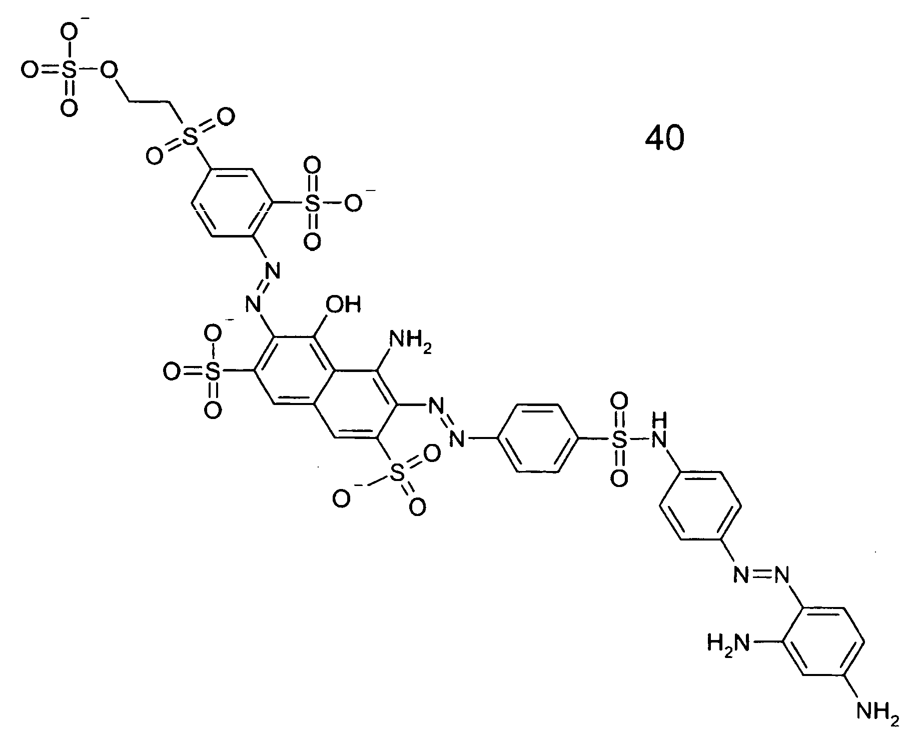

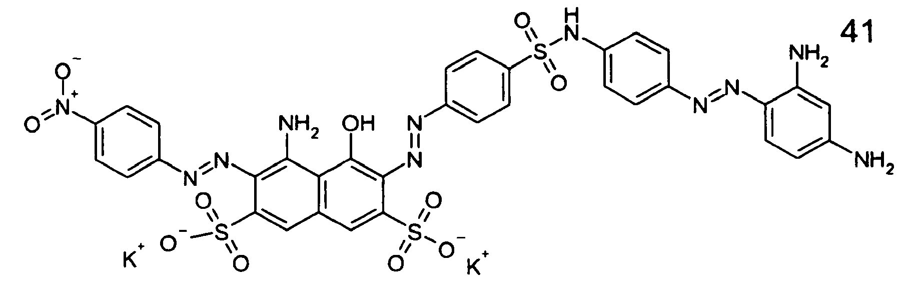

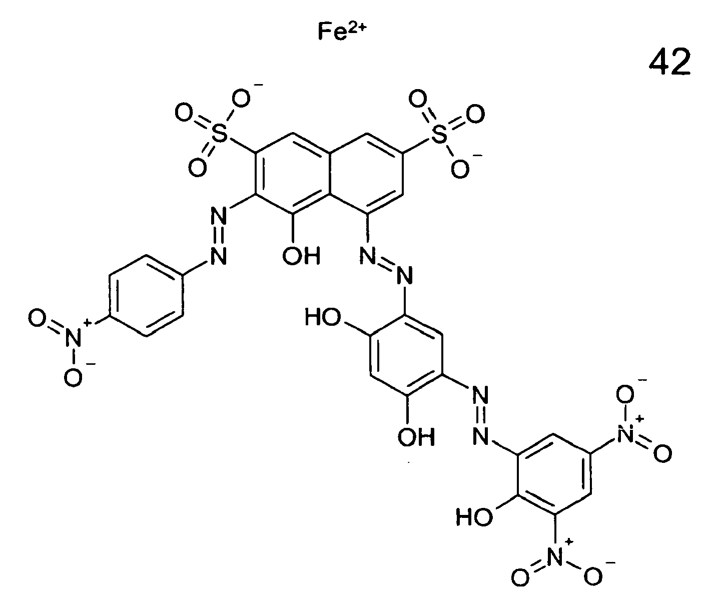

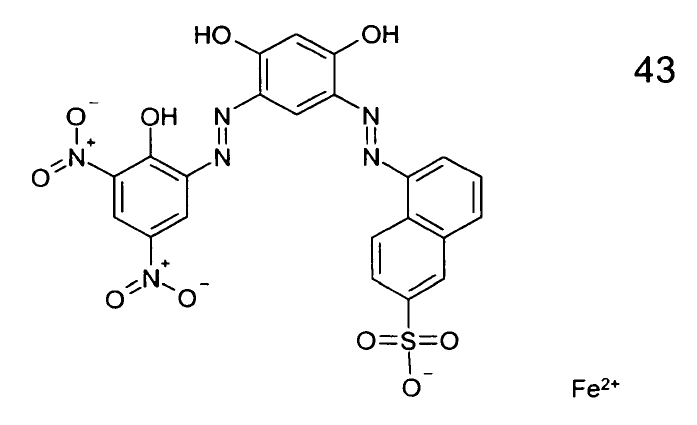

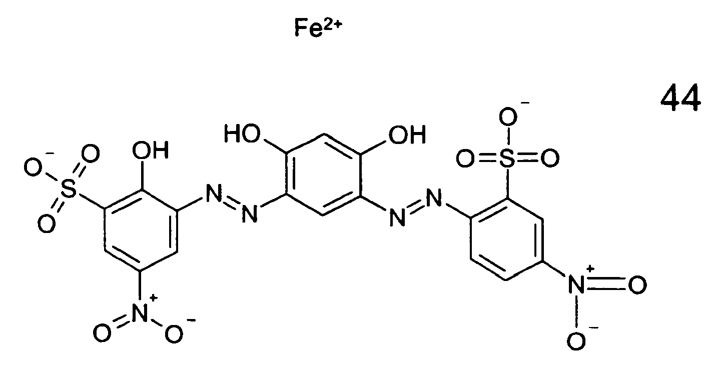

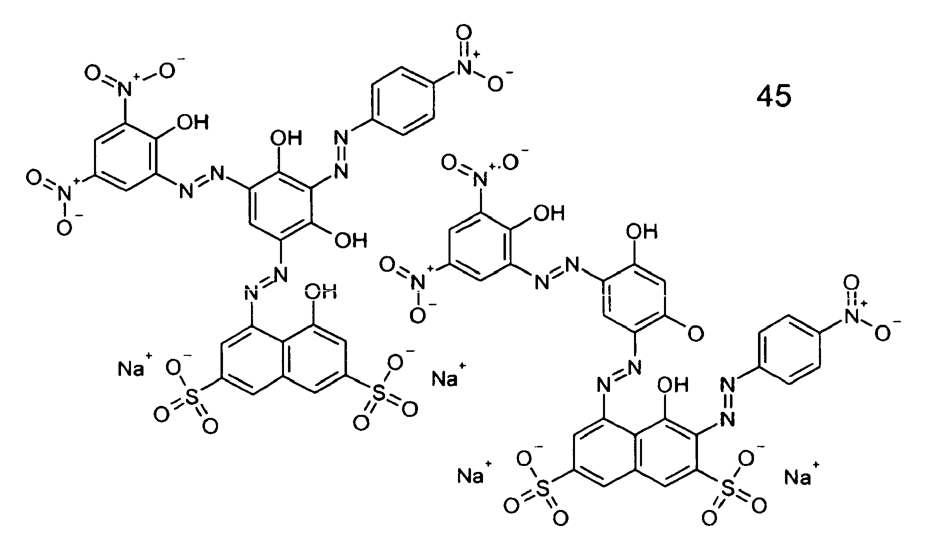

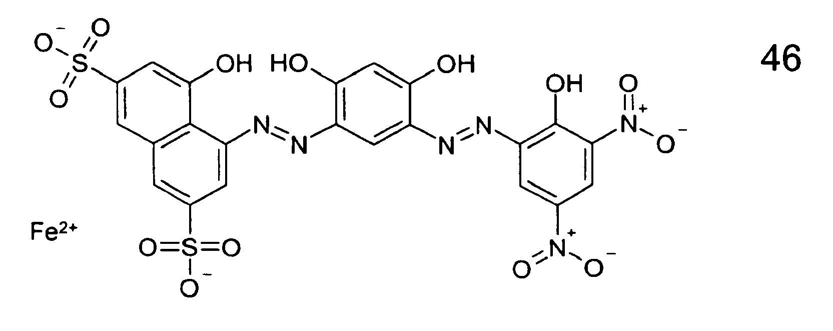

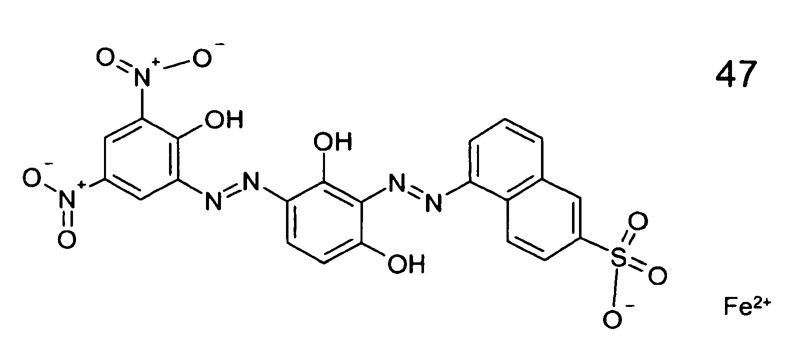

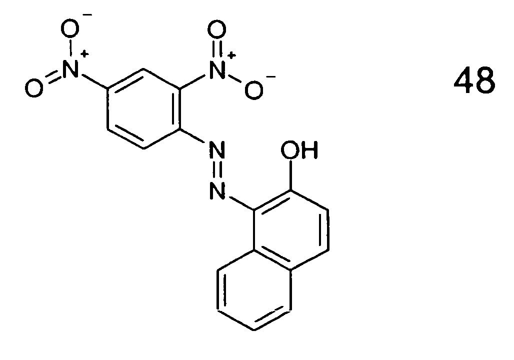

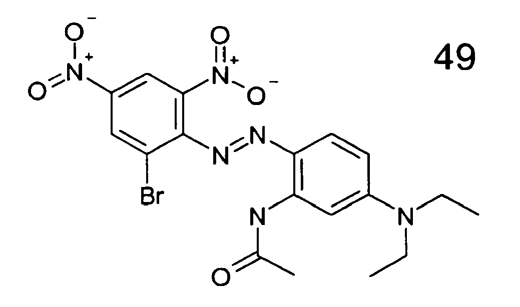

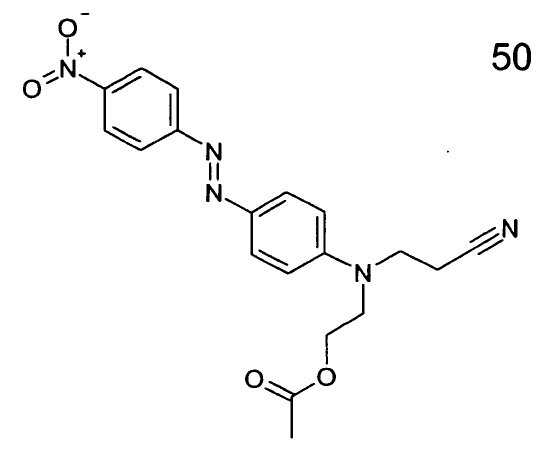

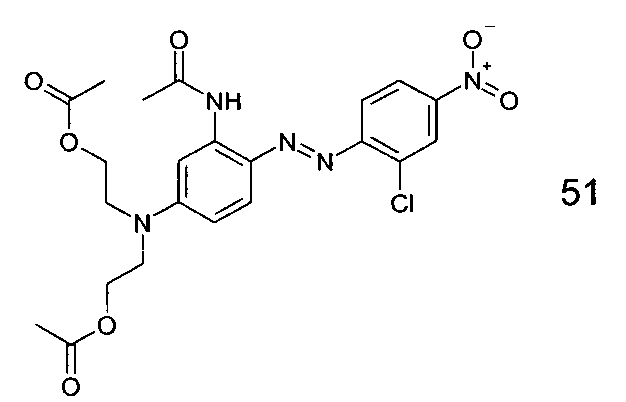

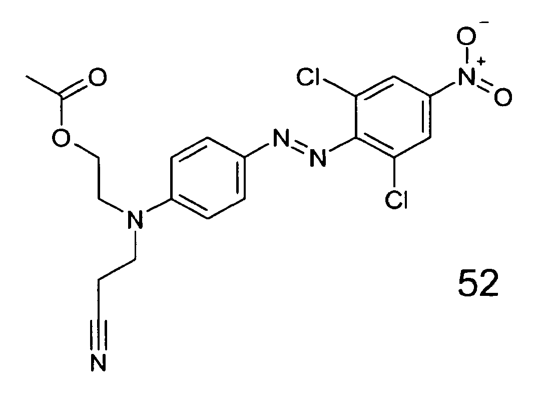

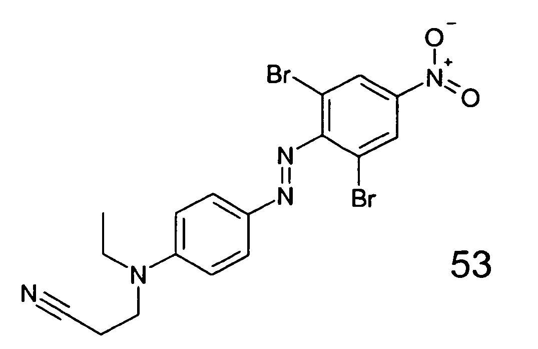

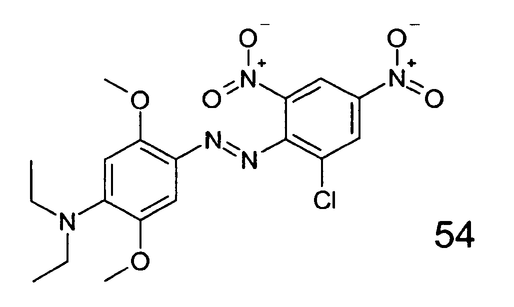

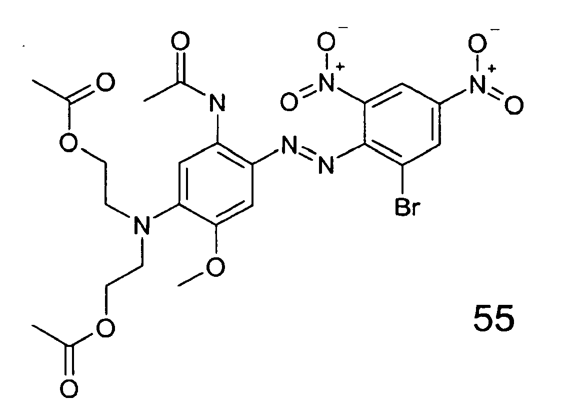

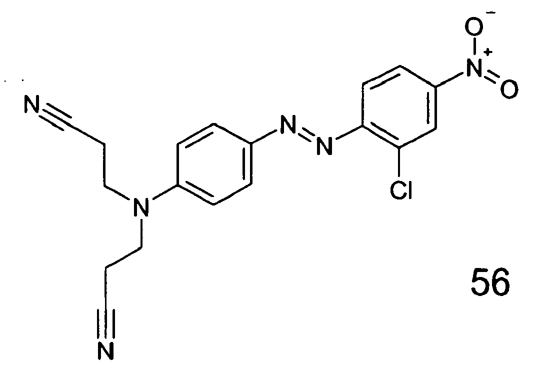

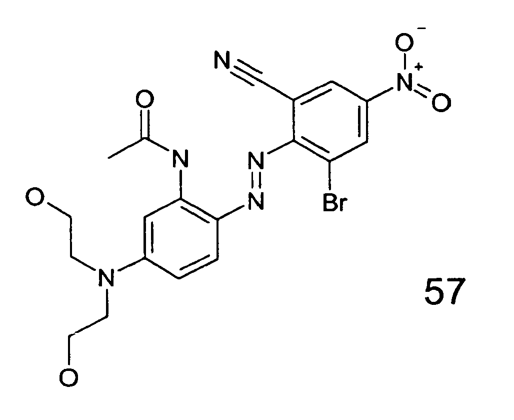

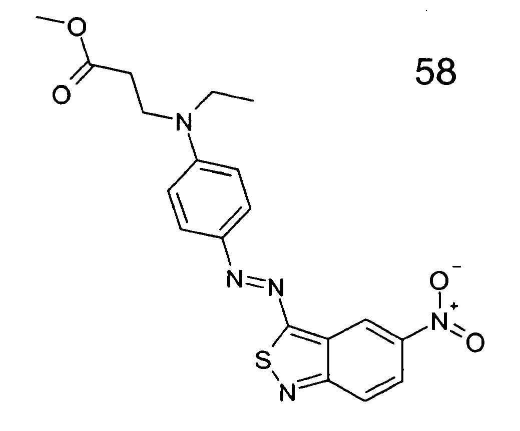

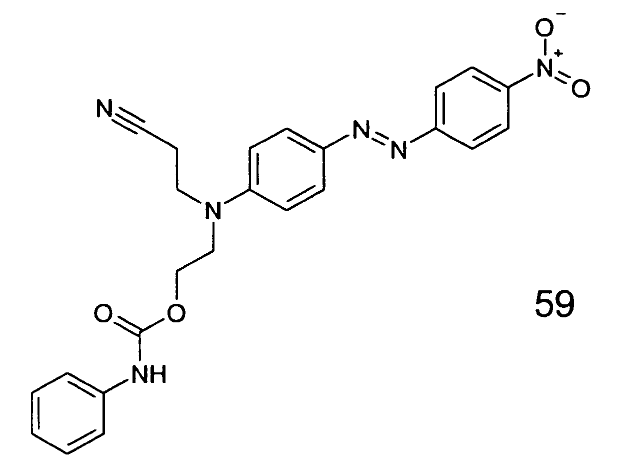

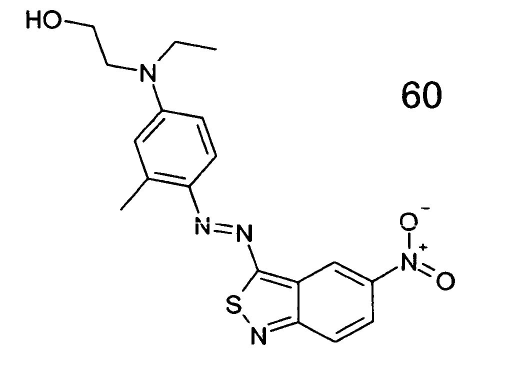

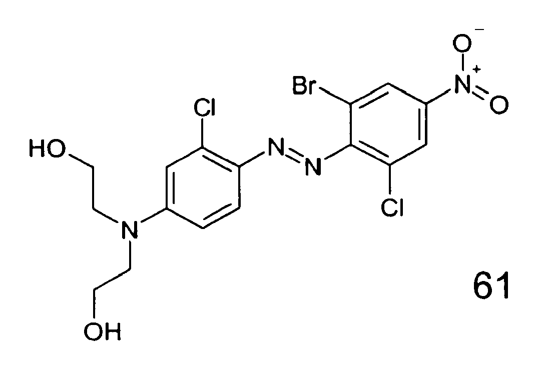

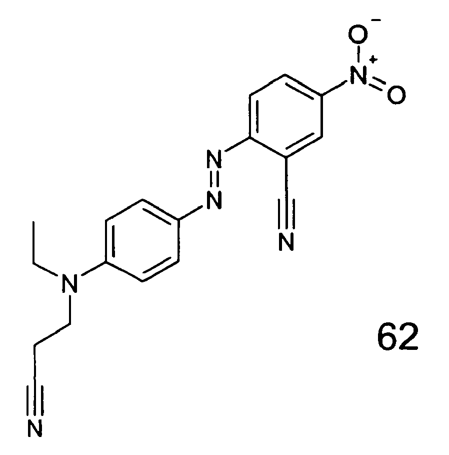

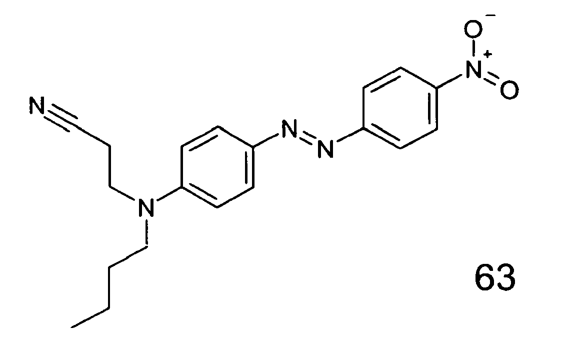

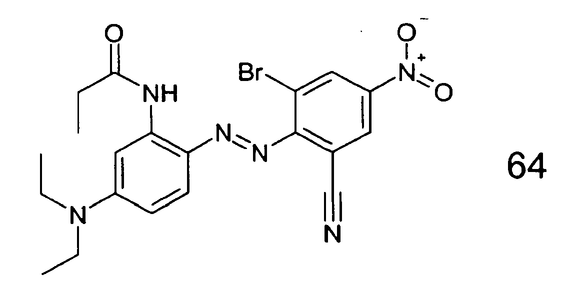

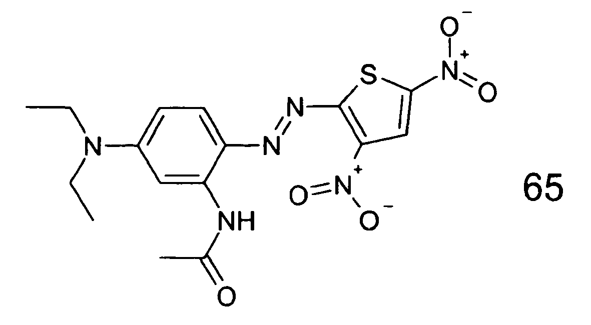

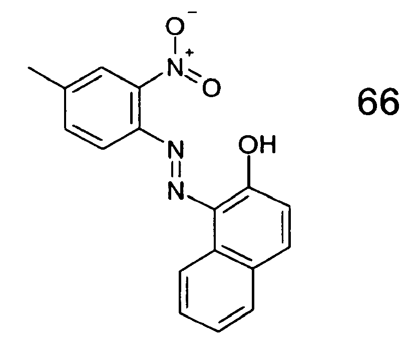

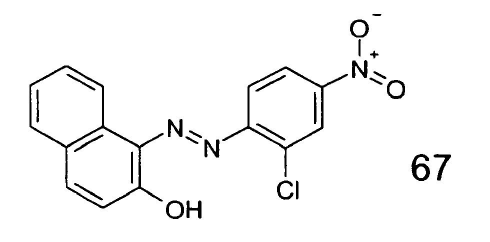

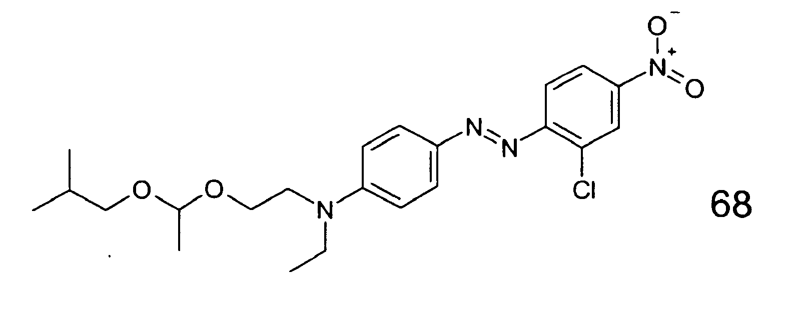

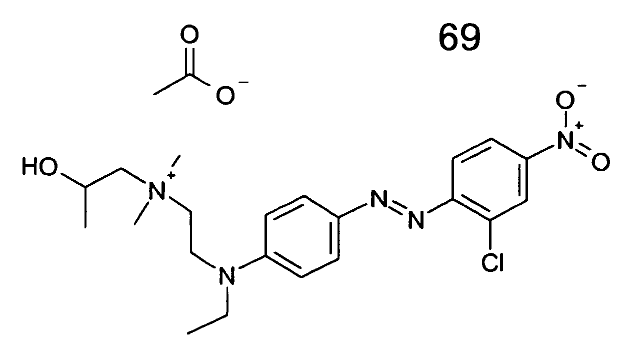

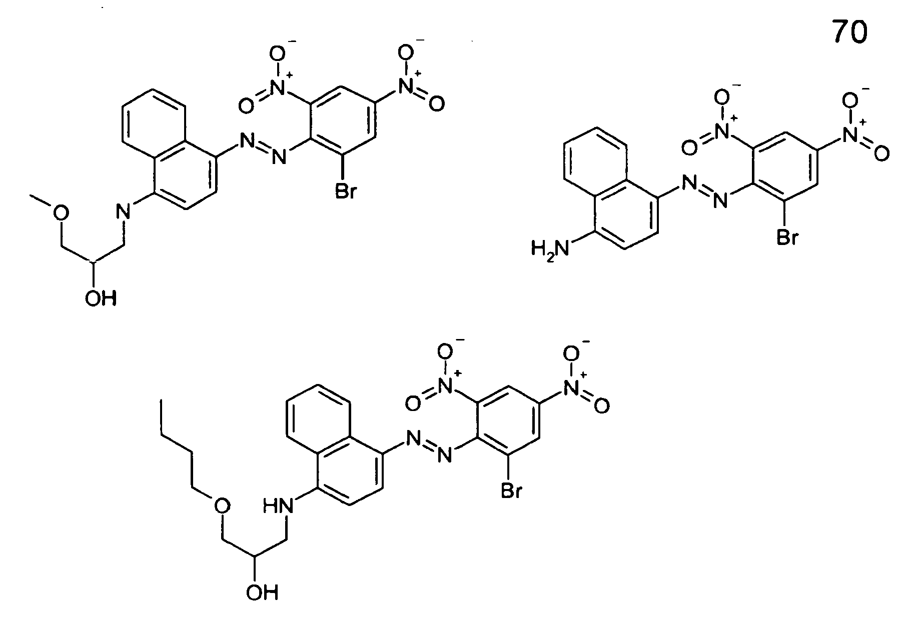

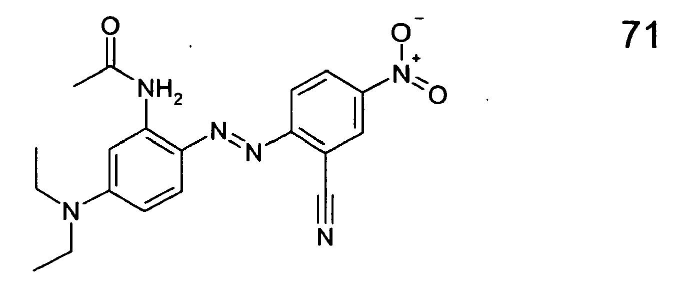

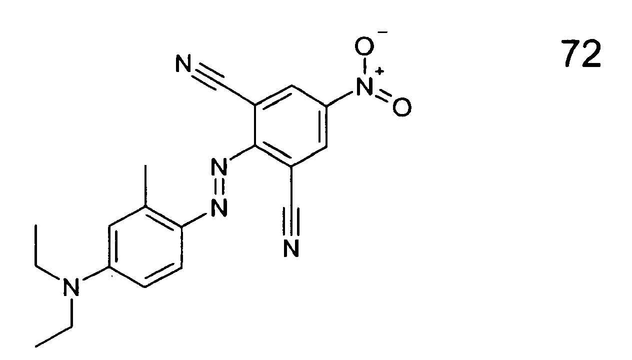

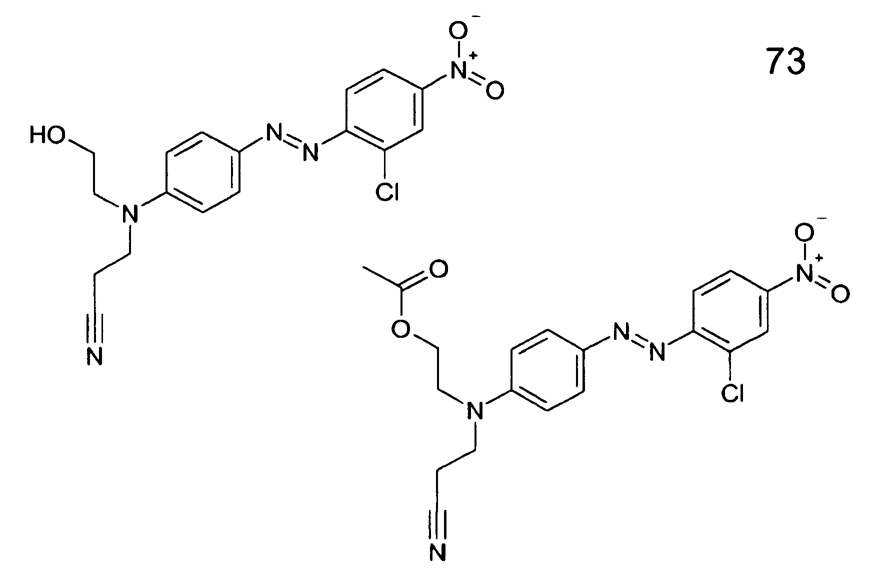

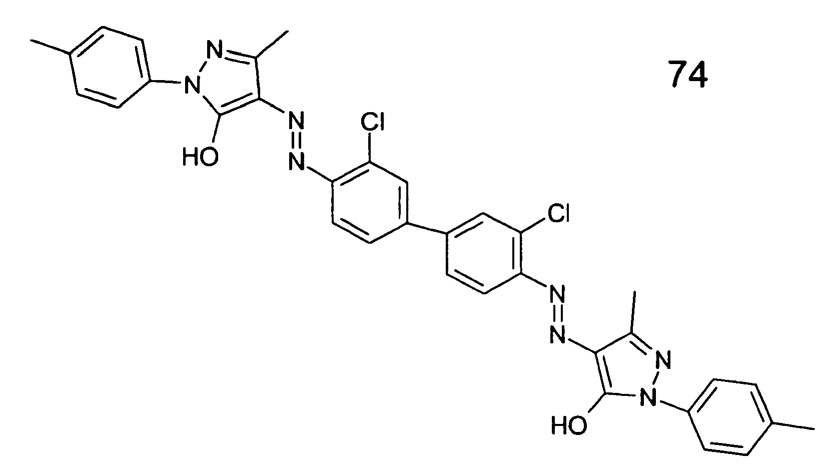

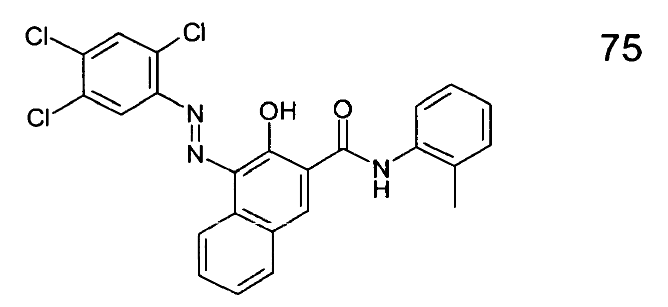

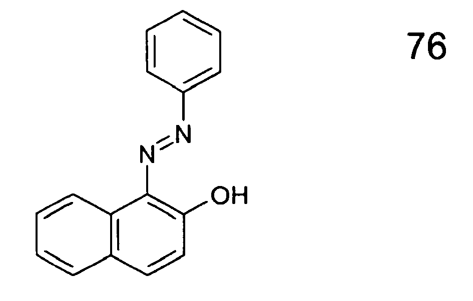

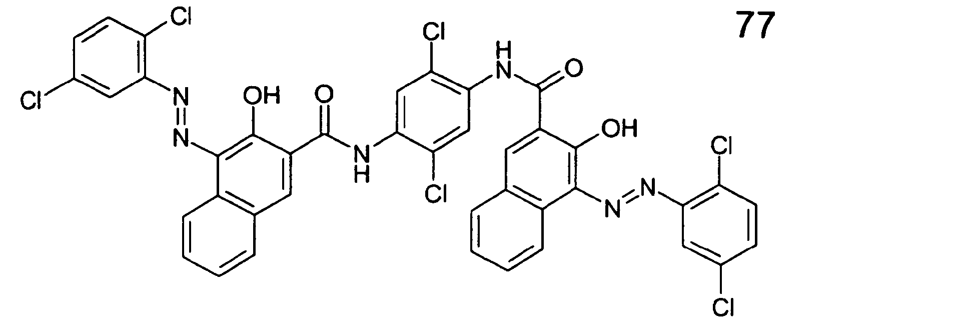

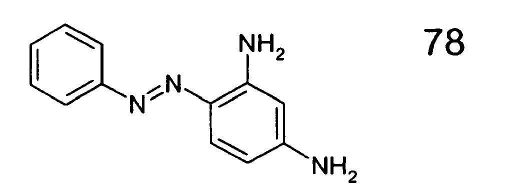

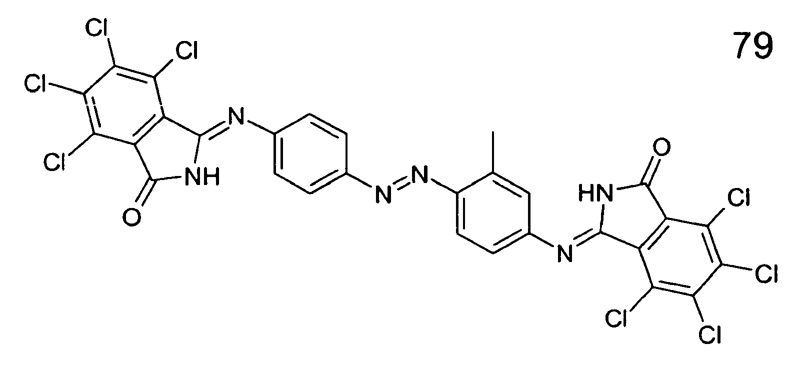

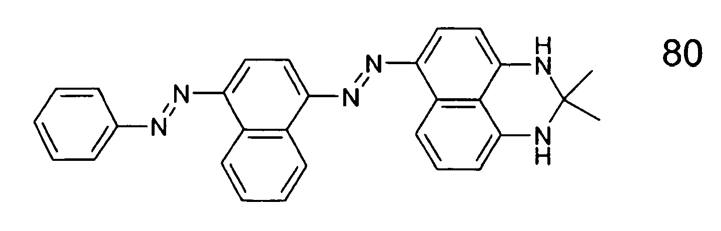

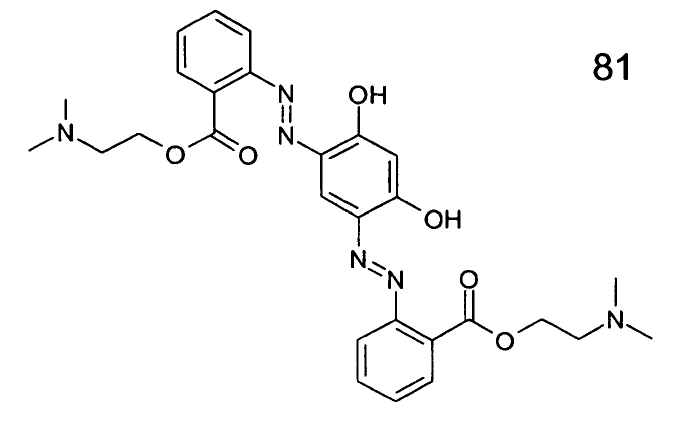

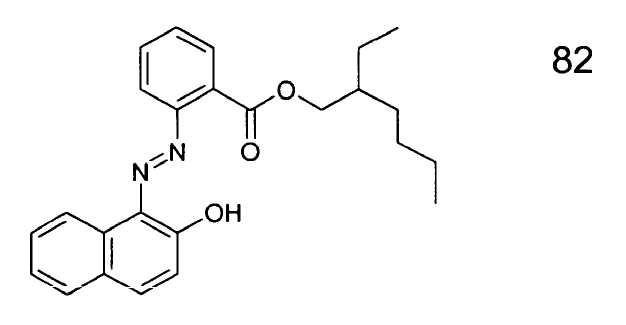

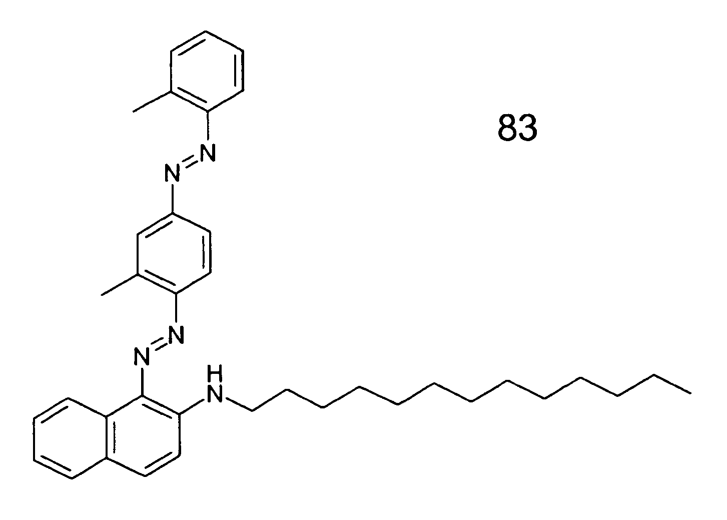

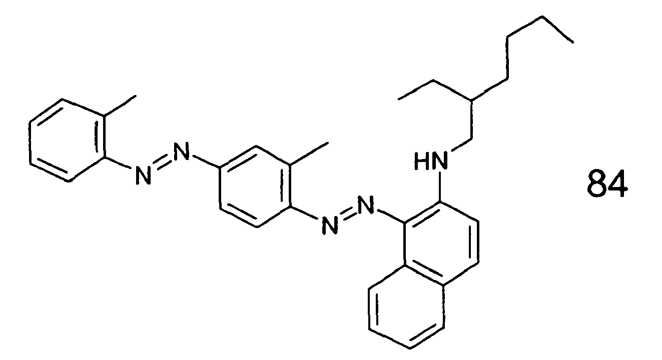

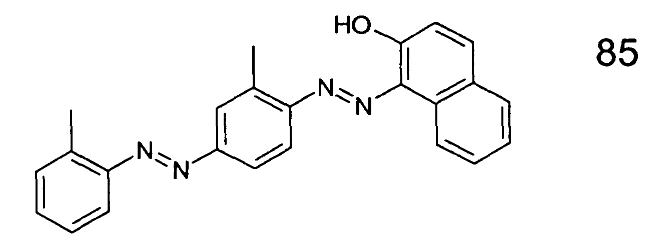

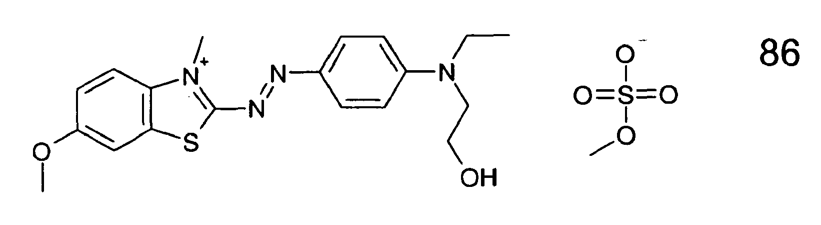

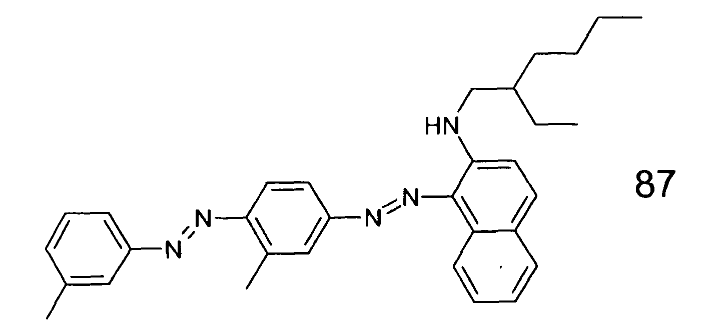

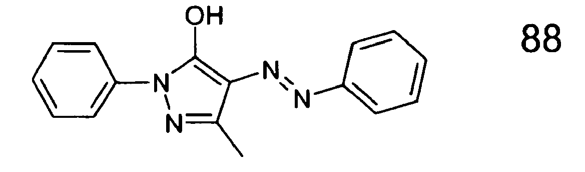

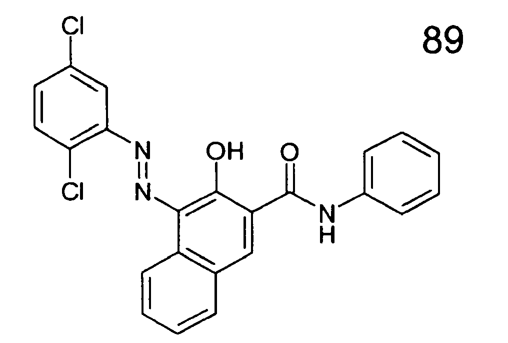

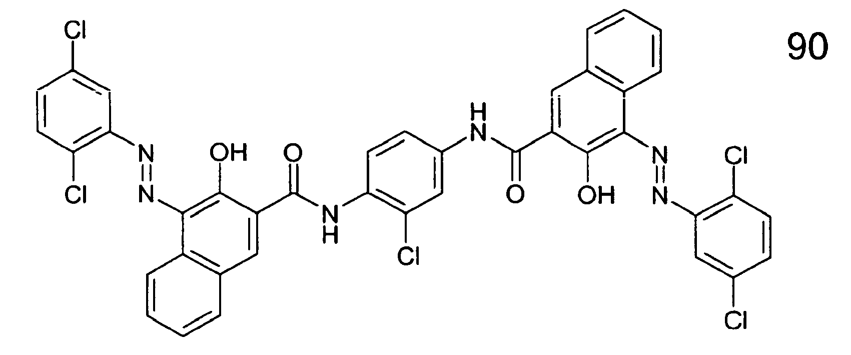

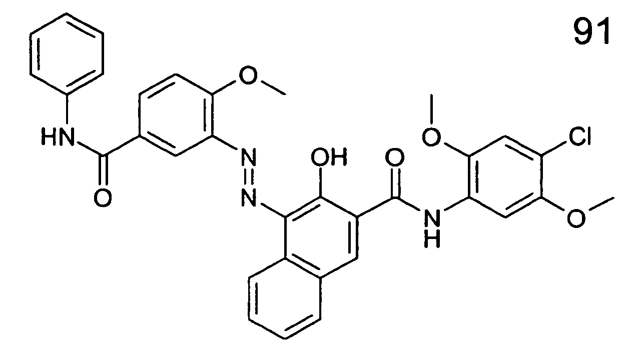

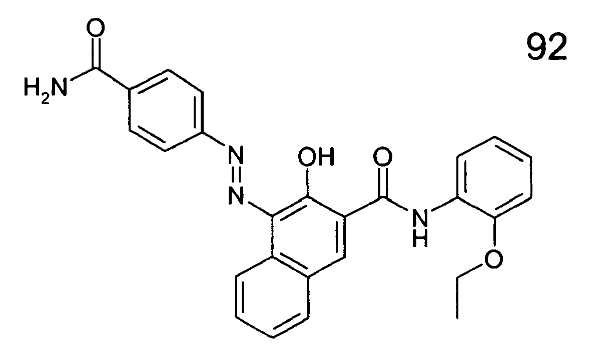

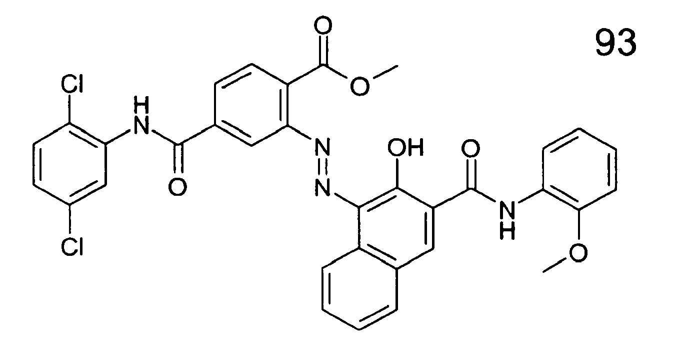

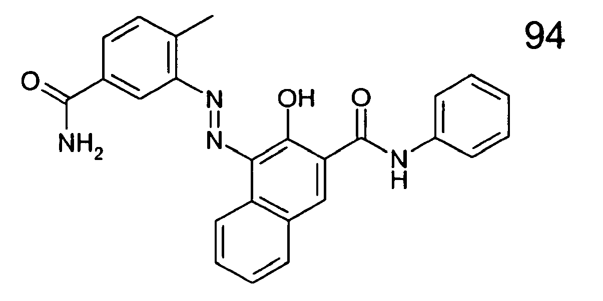

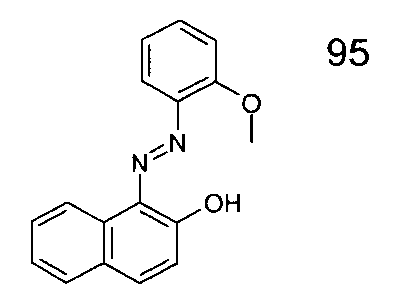

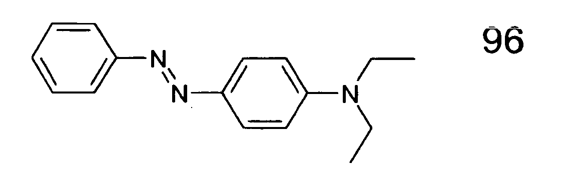

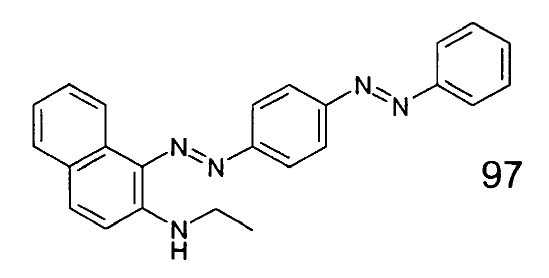

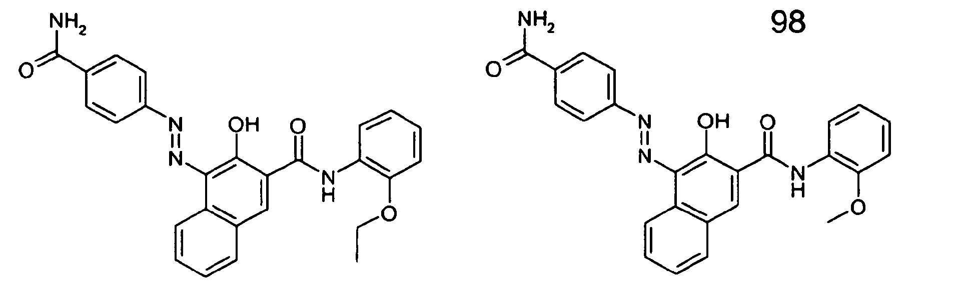

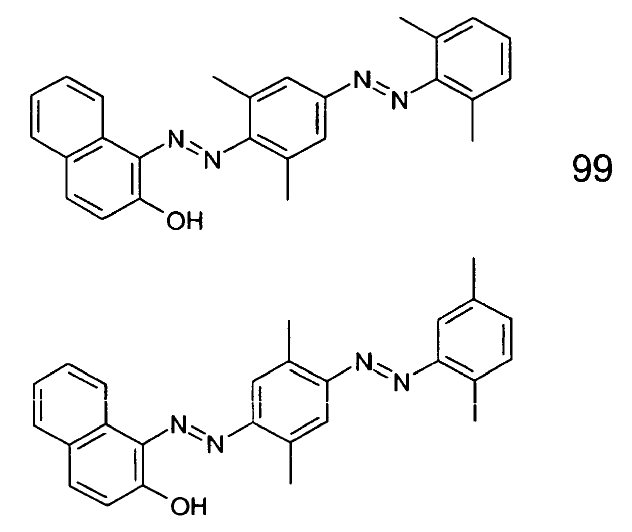

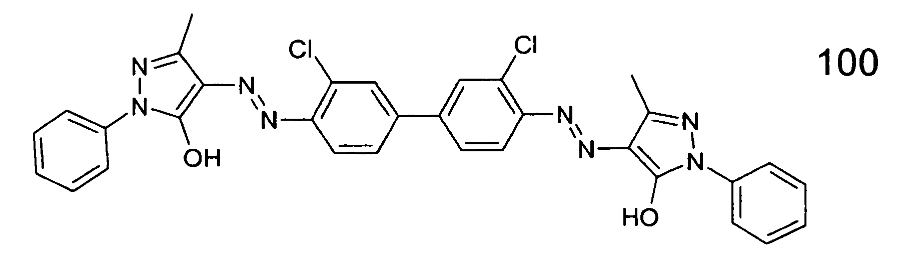

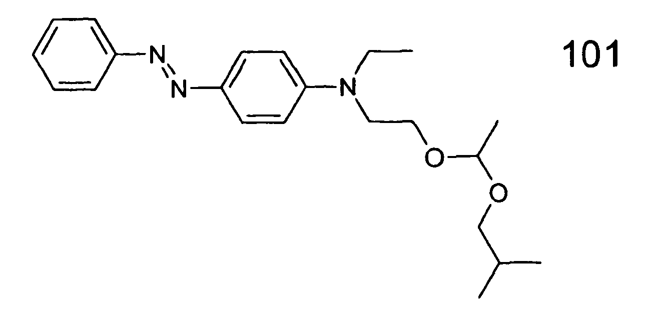

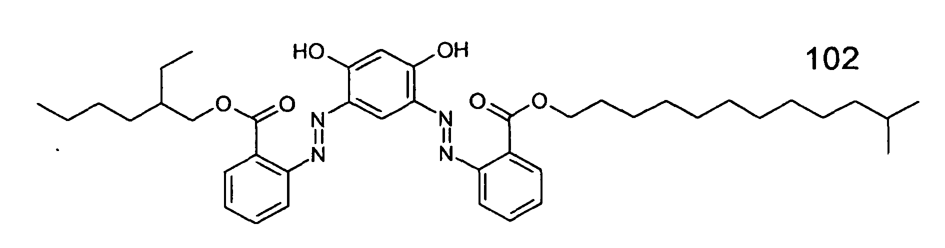

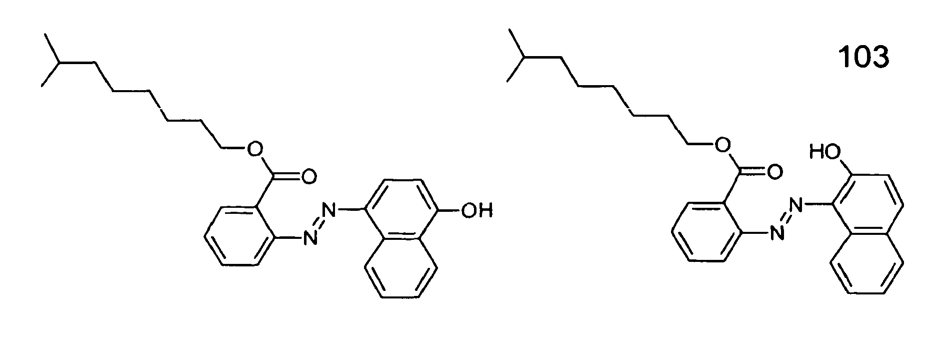

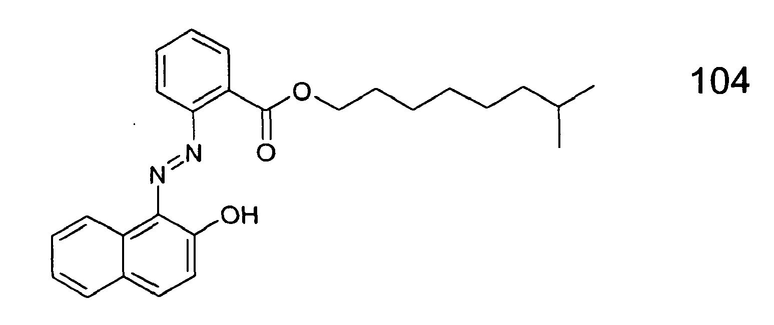

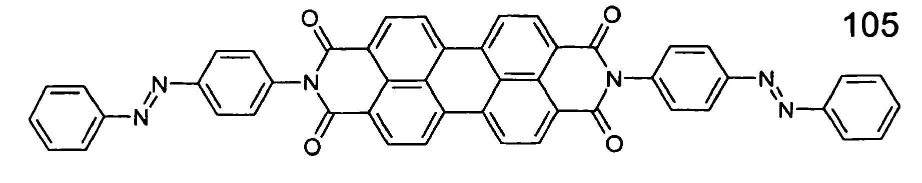

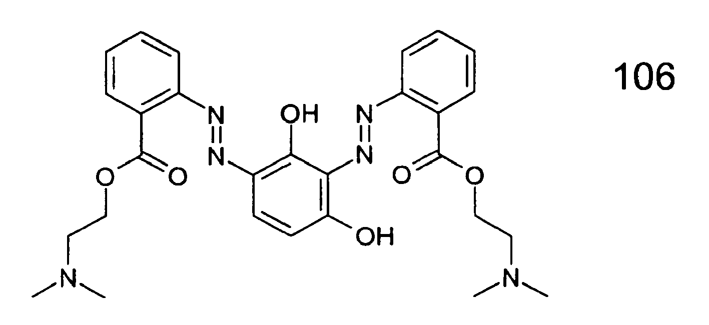

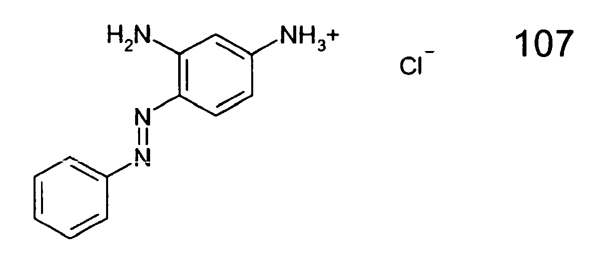

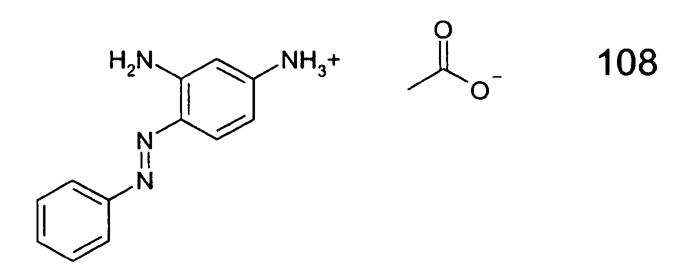

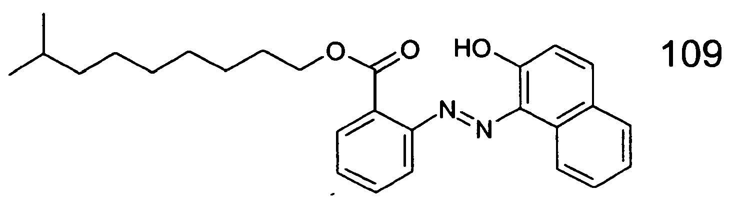

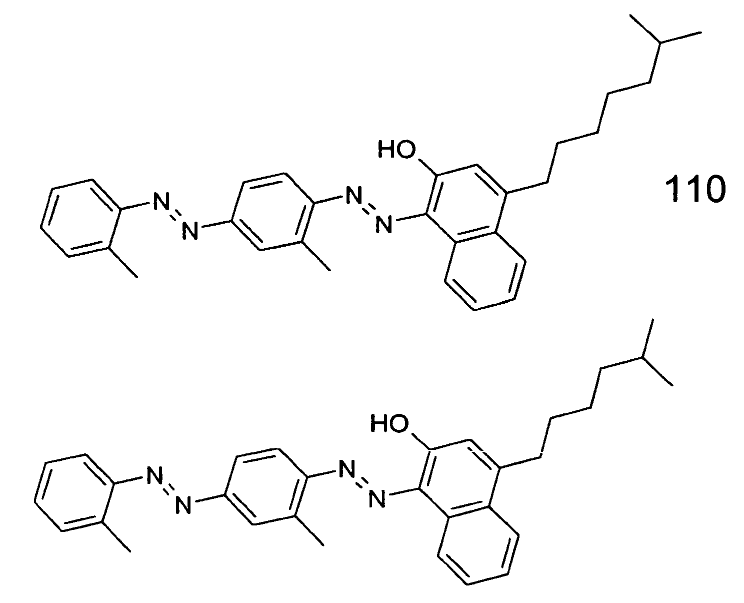

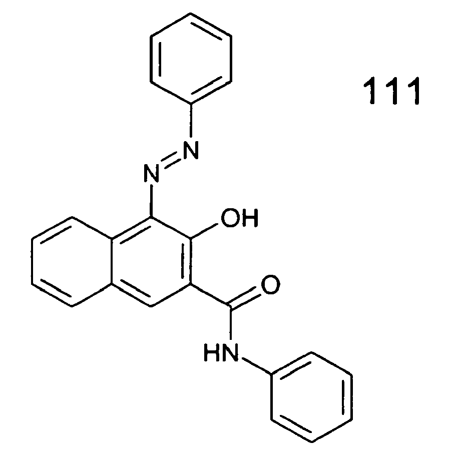

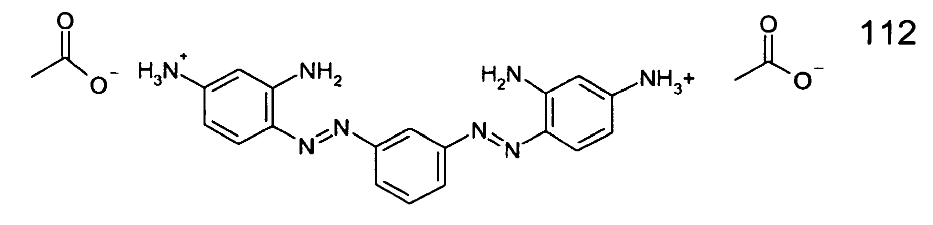

Bevorzugt werden die Azoverbindung aus der Gruppe, bestehend aus den Azoverbindungen 1, 3, 5, 6, 30, 78, 95 und 112, und insbesondere 1 (= E123), 3 (= E110), 5 (= E128) und 6 (= E129). 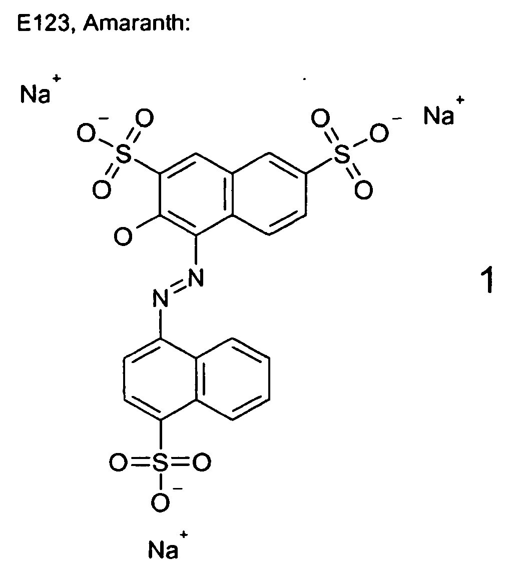 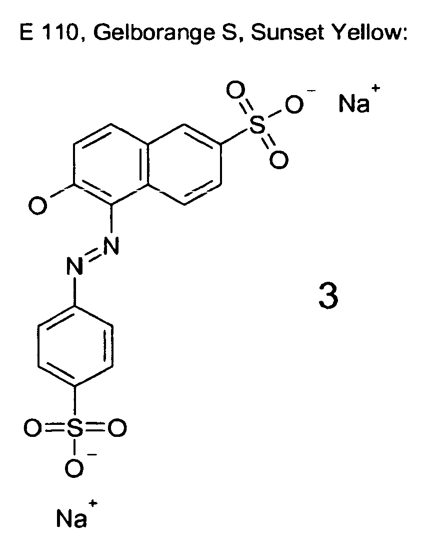 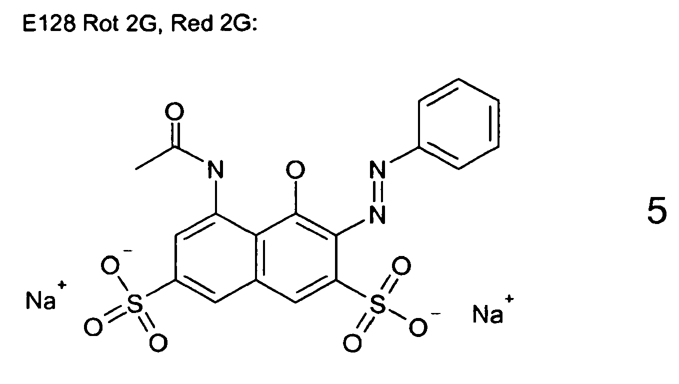 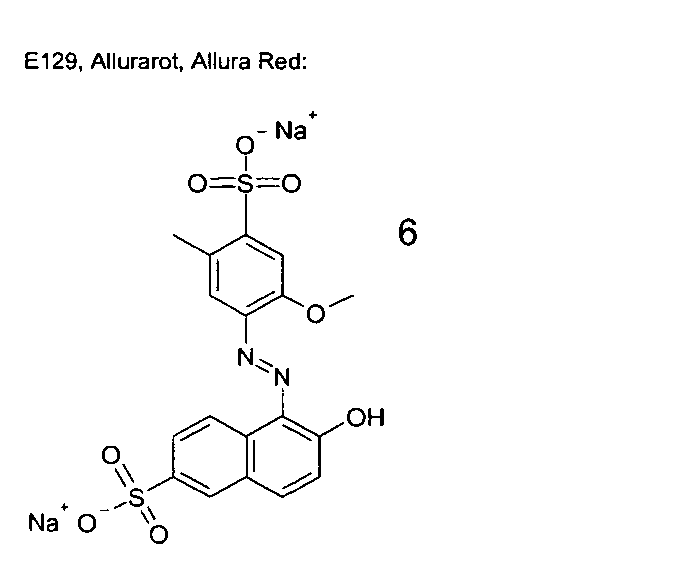 ausgewählt.

Dabei sind die folgenden Kombinationen zweier bevorzugter Azoverbindungen besonders vorteilhaft: E110/E128, E110/E129, E128/E129, E123/E110, E123/E128 und E123/E129, insbesondere E110/E129.

Ganz besonders bevorzugt handelt es sich um eine zuckerfreie Zusammensetzung, die ACK enthält und die Kombination der beiden Azo Verbindungen E110 und E 129.

Außer den vorstehend beschriebenen, erfindungsgemäß zu verwendenden Azoverbindungen können noch andere übliche und bekannte geschmacksmodulierende Stoffe in wirksamen Mengen eingesetzt werden. Beispiele geeigneter üblicher und bekannter geschmacksmodulierender Stoffe sind die eingangs beschriebenen.

### Beispiele

### Beispiele 1 und 2

Die Verwendung von zwei Azofarbstoffen zur Geschmacksmodulation von ACK

Für die Beispiele 1 und 2 wurden die folgenden Stoffe verwendet.

### HIS:

Acesulfam K (ACK) von Fluca Bio Chemika;

### Azoverbindungen:

Nr. 3: E110, Sunset Yellow der Firma Sigma;
Nr. 6: E129, Allura Red der Firma Sigma;

### Cola-Getränk:

Eine so genannte "Null-Cola" ohne Süßstoff wurde wie folgt hergestellt:
- 36 g Cola-Aroma (Cola-Grundstoff der Firma Döhler, Darmstadt, Artikel-Nr. 200380),
- 7,7 g ortho-Phosphorsäure 85% reinst (Karl Roth GmbH + Co KG, Karisruhe, Artikel-Nr. 9079.1),
- 3,6 g Zitronensäure 99,5% p.a. (Karl Roth GmbH + Co KG, Karlsruhe, Artikel-Nr. 3958.2),
- 2,4 g Natriumbenzoat der Firma Fluka, Sigma-Aldrich, Steinbrunn, und
- 1,2 g Koffein wasserfrei 99% der Firma Fluka, Sigma-Aldrich, Steinbrunn
wurden in 600 ml Leitungswasser gelöst. Von diesem Konzentrat wurden jeweils 50 ml zu einem Liter "Null-Cola" aufgefüllt.

### Quantitative sensorische Prüfung - allgemeine Testvorschrift:

Von den Proben 1 und 2 der Beispiele 1 und 2 sowie den Kontrollproben 1 und 2 wurden Konsensprofile in Übereinstimmung mit DIN 10967-2/ISO 11035 erstellt. Dazu wurden 8 trainierte Probanden, die gemäß den DIN/ISO-Vorschriften ausgewählt worden waren, mit den Produkten durch Definition und Trainieren der vorgegebenen Merkmalseigenschaften vertraut gemacht. Anschließend verkosteten die Probanden die Proben 1 und 2, um den Geschmack, den Nachgeschmack und das Mundgefühl entsprechend den vorgegebenen Merkmalseigenschaften zu bewerten. Die jeweiligen Konsensprofile wurden vom Prüfungsleiter in der Form von Tabellen und Spinnwebdiagrammen zusammengefasst. Im Folgenden werden der Übersichtlichkeit halber lediglich die Tabellen wiedergegeben.

### Proben 1 und 2 und Kontrollproben 1 und 2 - stoffliche Zusammensetzung:

Die Proben 1 und 2 und die Kontrollproben 1 und 2 wiesen die nachstehend beschriebenen stofflichen Zusammensetzungen auf. Die jeweiligen Abkürzungen, die in den nachfolgenden Tabellen verwendet werden, werden in Klammern angegeben.

### Kontrollprobe 1:

Wasser + 500 mg/l ACK (Abkürzung: Wasser/ACK)

### Kontrollprobe 2:

Null-Cola + 500 mg/l ACK (Abkürzung: Cola/ACK)

### Probe 1 - Beispiel 1:

Wasser + 500 mg/l ACK + 2,3 mg/l Azoverbindung E110 + 2,5 mg/l Azoverbindung E129
(Abkürzung: Wasser/ACK/E110/E129)

### Probe 2 - Beispiel 2:

Null-Cola + 500 mg/l ACK + 2,3 mg/l Azoverbindung E110 + 2,5 mg/l Azoverbindung E129
(Abkürzung: Cola/ACK/ /E110/E129)

### Proben 1 und 2 und Kontrollproben 1 und 2 - Versuchsergebnisse:

Die Ergebnisse der quantitativen sensorischen Prüfung der Probe 1 und der Kontrollprobe 1 sind in der Tabelle 1 zusammengestellt.

Die Ergebnisse der quantitativen sensorischen Prüfung der Probe 2 und der Kontrollprobe 2 sind in der Tabelle 2 zusammengestellt.

Bei beiden Tabellen bedeutet der Messwert 0, dass die betreffende sensorische Eigenschaft nicht vorhanden war, während der Messwert 10 bedeutet, dass die betreffende sensorische Eigenschaft stark vorhanden war.

**Tabelle 1: Quantitative sensorische Prüfung der Probe 1 und der Kontrollprobe 1 - Konsensprofile**

| Kontrollprobe/ Probe | Geschmack | | Mundgefühl | | | | Nachgeschmack | |
|---|---|---|---|---|---|---|---|---|
| | S^{a)} | Bt^{b)} | C^{c)} | K^{d)} | Bl^{e)} | A^{f)} | S(N)^{g)} | Bt(N)^{h)} |
| | | | | | | | | |
| Kontrollprobe 1 | | | | | | | | |
| Wasser/ACK | 6 | 4 | 4 | 0 | 4 | 2 | 3 | 6 |
| | | | | | | | | |
| Probe 1 | | | | | | | | |
| Wasser/ACK/E110/E129 | 5 | 0 | 4 | 0 | 4 | 2 | 2 | 0 |
| | | | | | | | | |

| | | | | | | | | |
|---|---|---|---|---|---|---|---|---|
| a) S = süß; b) Bt = bitter; c) C = chemisch; d) K = kratzend; e) BI = belegend; f) A = austrocknend; g) S(N) = süßer Nachgeschmack; h) Bt(N) = bitterer Nachgeschmack; | | | | | | | | |

Die Ergebnisse der Tabelle 1 belegen, dass die beiden Azoverbindungen E110 und E129 einen so starken geschmacksmodulierenden Effekt aufwiesen, dass der bittere Geschmack und der bittere Nachgeschmack von ACK in Wasser nicht mehr vorhanden war.

**Tabelle 2: Quantitative sensorische Prüfung der Probe 2 und der Kontrollprobe 2 - Konsensprofile**

| Kontrollprobe/ Probe | Geschmack | | | | | | | Mundgefühl | | | Nachgeschmack | |
|---|---|---|---|---|---|---|---|---|---|---|---|---|
| | BS^{a)} | Sä^{b)} | Bt^{c)} | KC^{c)} | M^{e)} | | Co^{f)} | S^{g)} | A^{h)} | Blⁱ⁾ | Au^{j)} | S(N)^{k)} Bt(N |
| | | | | | | | | | | | | |
| Kontrollprobe 2 | | | | | | | | | | | | |
| Cola/ACK | 1 | 6 | 4 | 4 | 2 | 4 | 4 | 2 | 4 | 3 | 3 | 1 |
| | | | | | | | | | | | | |
| Probe 2 | | | | | | | | | | | | |
| Cola/ACK/E129/E110 | 0,5 | 7 | 2 | 6 | 2 | 2 | 3 | 2 | 3 | 4 | 3 | 0 |
| | | | | | | | | | | | | |

| | | | | | | | | | | | | |
|---|---|---|---|---|---|---|---|---|---|---|---|---|
| a) BS = Beginn der Süße; b) Sä = sauer; c) Bt = bitter; d) KC = künstlich/chemisch; e) M = metallisch; f) Co = Cola; g) S = süß; h) A = adstringierend; i) BI = belegend; j) Au = austrocknend; k) S(N) = süßer Nachgeschmack; l) Bt(N) = bitterer Nachgeschmack; | | | | | | | | | | | | |

Die Ergebnisse der Tabelle 2 belegen, dass mithilfe der beiden Azoverbindungen E110 und E129 der bittere Geschmack und der bittere Nachgeschmack von ACK in Cola signifikant reduziert werden konnte.

## Patentansprüche

1. Verfahren zur Geschmacksmodulation von stofflichen Zusammensetzungen, die mindestens einen High Intensity Sweetener HIS enthalten, **dadurch gekennzeichnet, dass** einer stofflichen Zusammensetzung, die mindestens einen HIS enthält, mindestens zwei Azoverbindungen in einer Gesamtkonzentration von 0,1 bis 30 ppm oder 0,1 bis 30 mg/l als Geschmacksmodulatoren zugesetzt werden.

2. Verfahren nach Anspruch 1, **dadurch gekennzeichnet, dass** es sich bei den stofflichen Zusammensetzungen um Lebensmittel, Getränke, Genussmittel, Süßungsmittel, Tiernahrungsmittel, Kosmetika und Pharmazeutika handelt.

3. Verfahren nach Anspruch 1 oder 2, **dadurch gekennzeichnet, dass** der oder die HIS aus der Gruppe, bestehend aus Acesulfam-Kalium, Aspartam, Saccharin und seinen Salzen, Cyclamat und seinen Salzen, Aspartam-Acesulfam-Salz, Sucralose, Thaumatin, Stevia, Steviasid und Neohesperidin-Dihydrochalkon, ausgewählt wird oder werden.

4. Verfahren nach Anspruch 3, **dadurch gekennzeichnet, dass** Acesulfam-Kalium als HIS verwendet wird.

5. Verfahren nach einem der Ansprüche 1 bis 4, **dadurch gekennzeichnet, dass** zwei Azoverbindungen verwendet werden.

6. Verfahren nach einem der Ansprüche 1 bis 5, **dadurch gekennzeichnet, dass** die Azoverbindungen jeweils mindestens eine Azogruppe enthalten.

7. Verfahren nach einem der Ansprüche 1 bis 6, **dadurch gekennzeichnet, dass** die Azoverbindungen wasserlöslich sind.

8. Verfahren nach einem der Ansprüche 1 bis 7, **dadurch gekennzeichnet, dass** die Azogruppen der Azoverbindungen mit Arylgruppen und/oder Arylgruppen mit Heteroatomen verknüpft sind.

9. Verfahren nach Anspruch 8, **dadurch gekennzeichnet, dass** die Azogruppen der Azoverbindungen mit Arylgruppen verknüpft sind.

10. Verfahren nach Anspruch 9, **dadurch gekennzeichnet, dass** die Arylgruppen Phenylgruppen und Naphthylgruppen sind.

11. Verfahren nach einem der Ansprüche 8 bis 10, **dadurch gekennzeichnet, dass** mindestens eine Arylgruppe mindestens einfach substituiert ist.

12. Verfahren nach Anspruch 11, **dadurch gekennzeichnet, dass** die Substituenten aus der Gruppe, bestehend aus Sulfonsäuregruppen, Nitrogruppen, Alkylgruppen, Carboxylgruppen, Hydroxylgruppen, Estergruppen, Ethergruppen, primäre und sekundäre Aminogruppen, Amidgruppen, Nitrilgruppen und Halogenatome, ausgewählt werden.

13. Verfahren nach Anspruch 12, **dadurch gekennzeichnet, dass** die Substituenten Sulfonsäuregruppen und/oder Hydroxylgruppen sind.

14. Verfahren nach Anspruch 1 bis 13, **dadurch gekennzeichnet, dass** die Azoverbindungen aus der Gruppe, bestehend aus E110, E123, E128 und E129 ausgewählt werden:

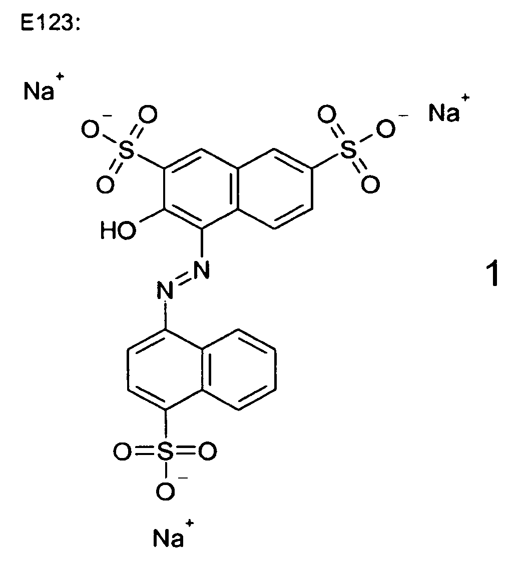

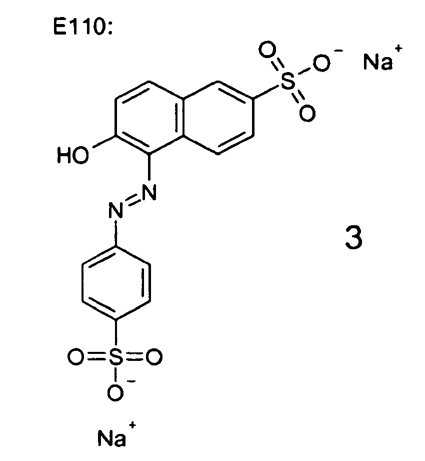

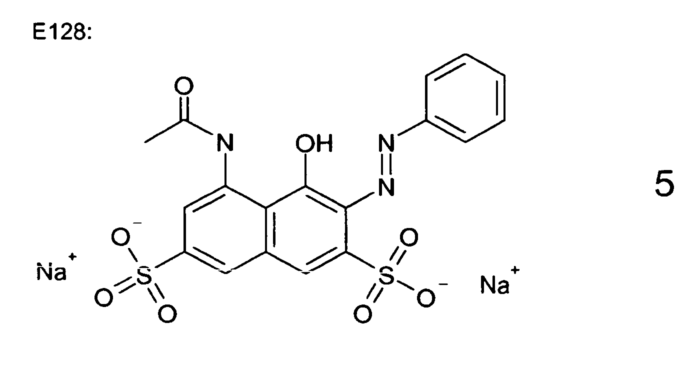

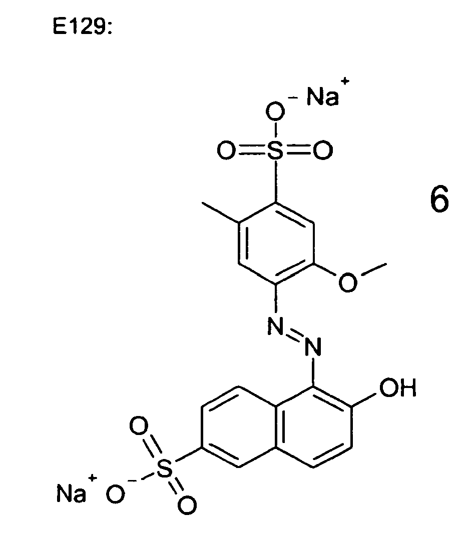

15. Verfahren nach Anspruch 14, **dadurch gekennzeichnet, dass** E110 und E129 als Azoverbindungen verwendet werden.

16. Verfahren nach einem der Ansprüche 1 bis 15, **dadurch gekennzeichnet, dass** es der Reduzierung des bitteren Geschmacks und des bitteren Nachgeschmacks der stofflichen Zusammensetzungen, die mindestens einen HIS enthalten, dient.

17. Verfahren nach einem der Anprüche 1-16, **dadurch gekennzeichnet, dass** es sich bei der stofflichen Zusammensetzung um eine zuckerarme, insbesondere um eine zuckerfreie, Zusammensetzung handelt.

18. Verfahren nach einem der Ansprüche 1-17, **dadurch gekennzeichnet, dass** es sich bei der stofflichen Zusammensetzung um ein Getränk, insbesondere um ein koffeinhaltiges Getränk, handelt.

19. Verfahren nach einem der Ansprüche 1-18, **dadurch gekennzeichnet, dass** es sich bei der stofflichen Zusammensetzung um eine kohlenhydratfreie Zusammensetzung handelt.

## Claims

1. Process for modulating the taste of material compositions which comprise at least one high-intensity sweetener HIS, **characterised in that** at least two azo compounds in a total concentration of 0.1 to 30 ppm or 0.1 to 30 mg/l are added as taste modulators to a material composition which comprises at least one HIS.

2. Process according to claim 1, **characterised in that** the material compositions are food, beverages, stimulants, sweeteners, animal food, cosmetics and pharmaceuticals.

3. Process according to claim 1 or 2, **characterised in that** the one or more HIS is/are selected from the group consisting of acesulfam potassium, aspartame, saccharine and its salts, cyclamate and its salts, aspartame-acesulfam-salt, sucralose, thaumatin, stevia, steviasid, and Neohesperidin dihydrochalcone.

4. Process according to claim 3, **characterised in that** acesulfam potassium is used as HIS.

5. Process according to any one of claims 1 to 4, **characterised in that** two azo compounds are used.

6. Process according to any one of claims 1 to 5, **characterised in that** the azo compounds each contain at least one azo group.

7. Process according to any one of claims 1 to 6, **characterised in that** the azo compounds are water-soluble.

8. Process according to any one of claims 1 to 7, **characterised in that** the azo groups of the azo compounds are linked to aryl groups and/or aryl groups with heteroatoms.

9. Process according to claim 8, **characterised in that** the azo groups of the azo compounds are linked to aryl groups.

10. Process according to claim 9, **characterised in that** the aryl groups are phenyl groups and naphthyl groups.

11. Process according to any one of claims 8 to 10, **characterised in that** at least one aryl group is at least monosubstituted.

12. Process according to claim 11, **characterised in that** the substituents are selected from the group consisting of sulfonic acid groups, nitro groups, alkyl groups, carboxyl groups, hydroxyl groups, ester groups, ether groups, primary and secondary amino groups, amid groups, nitrile groups and halogen atoms.

13. Process according to claim 12, **characterised in that** the substituents are sulfonic acid groups and/or hydroxyl groups.

14. Process according to any one of claims 1 to 13, **characterised in that** the azo compounds are selected from the group consisting of E110, E123, E128 and E129:

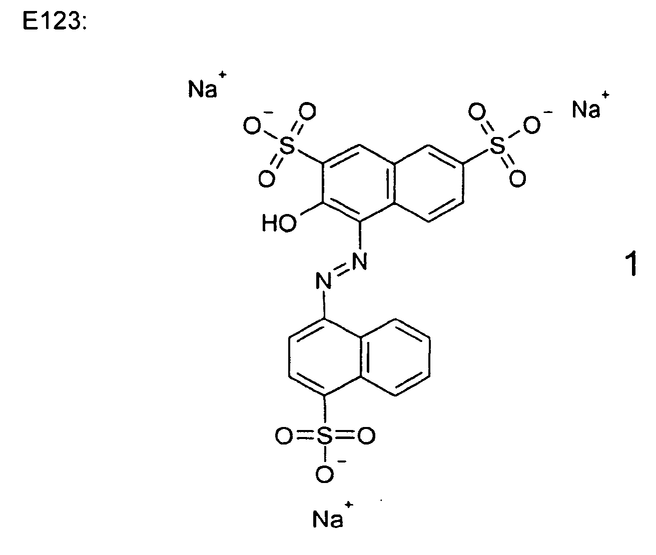

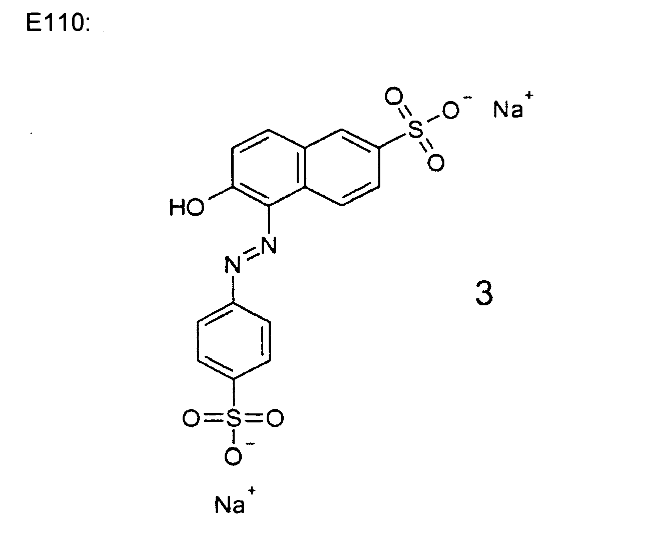

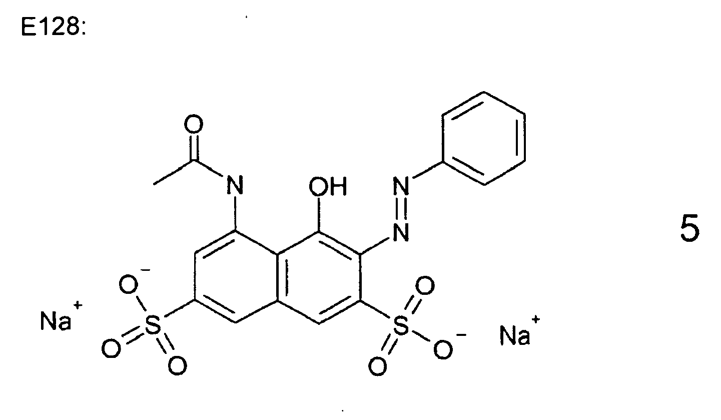

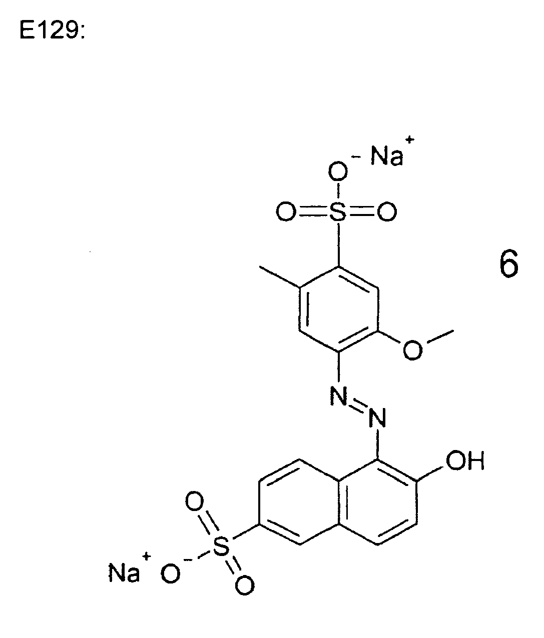

15. Process according to claim 14, **characterised in that** E110 and E129 are used as azo compounds.

16. Process according to any one of claims 1 to 15, **characterised in that** it is used to reduce the bitter taste and the bitter after taste of the material compositions, which comprise at least one HIS.

17. Process according to any one of claims 1 to 16, **characterised in that** the material composition is a low-sugar, in particular a sugar-free composition.

18. Process according to any one of claims 1 to 17, **characterised in that** the material composition is a beverage, in particular a caffeinated beverage.

19. Process according to any one of claims 1 to 18, **characterised in that** the material composition is a carbohydrate-free composition.

## Revendications

1. Procédé de modulation de goût de compositions matérielles contenant au moins un édulcorant de haute intensité (HIS), **caractérisé en ce qu'**à une composition matérielle contenant au moins un HIS sont ajoutés au moins deux composés azoïques à une concentration totale de 0,1 à 30 ppm ou de 0,1 à 30 mg/l en tant que modulateurs de goût.

2. Procédé selon la revendication 1, **caractérisé en ce que** les compositions matérielles sont des produits alimentaires, boissons, produits de luxe, édulcorants, aliments pour animaux, produits cosmétiques et pharmaceutiques.

3. Procédé selon la revendication 1 ou la revendication 2, **caractérisé en ce que** le ou les HIS est ou sont sélectionné(s) dans le groupe constitué de l'acésulfame-potassium, l'aspartame, la saccharine et ses sels, le cyclamate et ses sels, le sel d'aspartame-acésulfame, le sucralose, la thaumatine, la stévia, le stévioside et la néohespéridine-dihydrochalcone.

4. Procédé selon la revendication 3, **caractérisé en ce que** de l'acésulfame-potassium est utilisé en tant qu'HIS.

5. Procédé selon l'une des revendications 1 à 4, **caractérisé en ce que** deux composés azoïques sont utilisés.

6. Procédé selon l'une des revendications 1 à 5, **caractérisé en ce que** les composés azoïques contiennent chacun au moins un groupe azoïque.

7. Procédé selon l'une des revendications 1 à 6, **caractérisé en ce que** les composés azoïques sont solubles dans l'eau.

8. Procédé selon l'une des revendications 1 à 7, **caractérisé en ce que** les groupes azoïques des composés azoïques sont liés à des groupes aryles et/ou à des groupes aryles avec des hétéroatomes.

9. Procédé selon la revendication 8, **caractérisé en ce que** les groupes azoïques des composés azoïques sont liés à des groupes aryles.

10. Procédé selon la revendication 9, **caractérisé en ce que** les groupes aryles sont des groupes phényles et naphtyles.

11. Procédé selon l'une des revendications 8 à 10, **caractérisé en ce qu'**au moins un groupe aryle est substitué au moins une fois.

12. Procédé selon la revendication 11, **caractérisé en ce que** les substituants sont sélectionnés dans le groupe constitué des groupes acide sulfonique, des groupes nitro, des groupes alkyles, des groupes carboxyles, des groupes hydroxyles, des groupes esters, des groupes éthers, des groupes amines primaires et secondaires, des groupes amides, des groupes nitriles et des atomes d'halogène.

13. Procédé selon la revendication 12, **caractérisé en ce que** les substituants sont des groupes acide sulfonique et/ou des groupes hydroxyles.

14. Procédé selon les revendications 1 à 13, **caractérisé en ce que** les composés azoïques sont sélectionnés dans le groupe constitué de E110, E123, E128 et E129 :

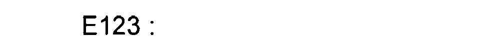

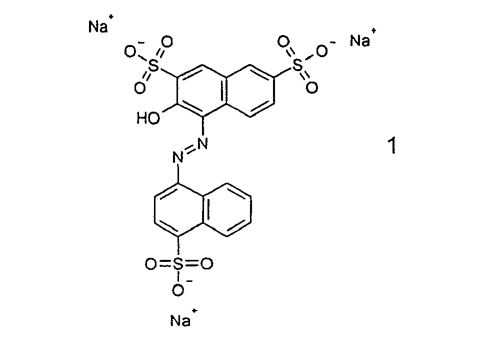

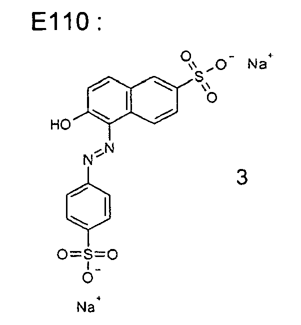

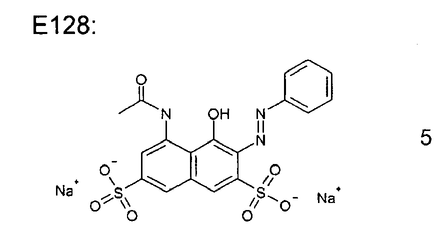

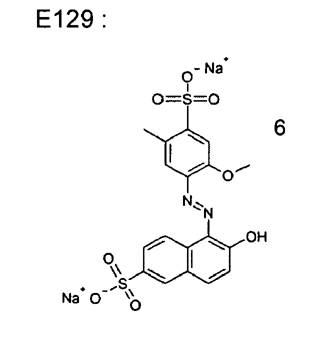

15. Procédé selon la revendication 14, **caractérisé en ce qu'**E110 et E129 sont utilisés comme composés azoïques.

16. Procédé selon l'une des revendications 1 à 15, **caractérisé en ce que** celui-ci sert à réduire le goût amer et l'arrière-goût amer des compositions matérielles contenant au moins un HIS.

17. Procédé selon l'une des revendications 1 à 16, **caractérisé en ce que** la composition matérielle est une composition pauvre en sucre, en particulier une composition exempte de sucre.

18. Procédé selon l'une des revendications 1 à 17, **caractérisé en ce que** la composition matérielle est une boisson, en particulier une boisson contenant de la caféine.

19. Procédé selon l'une des revendications 1 à 18, **caractérisé en ce que** la composition matérielle est une composition exempte de glucides.
